(19) **Europäisches Patentamt / European Patent Office / Office européen des brevets**

(11) **EP 4 622 198 A1**

(12) **EUROPEAN PATENT APPLICATION**
published in accordance with Art. 153(4) EPC

(43) Date of publication:
**24.09.2025 Bulletin 2025/39**

(21) Application number: **22966718.3**

(22) Date of filing: **28.11.2022**

(51) International Patent Classification (IPC):
**H04L 27/00** (2006.01)

(52) Cooperative Patent Classification (CPC):
**H04L 27/00**

(86) International application number:
**PCT/CN2022/134780**

(87) International publication number:
**WO 2024/113114 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **GAO, Na**
  **Shenzhen, Guangdong 518129 (CN)**
- **WANG, Ting**
  **Shenzhen, Guangdong 518129 (CN)**
- **TANG, Hao**
  **Shenzhen, Guangdong 518129 (CN)**
- **MA, Jianglei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND RELATED APPARATUS**

(57) A communication method and a related apparatus are provided. The method includes: sending at least two transport blocks TBs, where the at least two TBs include a first TB and a second TB, the first TB is a TB corresponding to a first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme; and sending a third TB if a preset condition is met, where the third TB includes at least one third modulation symbol, the third modulation symbol is obtained by modulating a third bit group based on a third modulation scheme, and the third bit group includes at least one bit in the first bit group and at least one bit in the second bit group. According to embodiments of this application, a transmission latency can be shortened.

Third device | First device | Second device

S701: Send at least two pieces of bandwidth part BWP configuration information

S702: Send at least two pieces of control information

S703: Send at least two transport blocks TBs

S704: Send a third TB if a preset condition is met

FIG. 7

EP 4 622 198 A1

## Description

## TECHNICAL FIELD

This application relates to the field of communication technologies, and in particular, to a communication method and a related apparatus.

## BACKGROUND

Ultra-reliability low-latency (ultra-reliability low latency communication, URLLC) is one of three major application scenarios of a 5th generation mobile communication technology (5th generation mobile communication technology, 5G), and is also a typical scenario of 5G that is different from 2G/3G/4G. As a breakthrough for the mobile communication industry to enter vertical industries, the URLLC is quite critical to wide application of fields such as self-driving, industrial manufacturing, the internet of vehicles, and a smart grid.

The URLLC scenario is mainly characterized by a low latency and high reliability. To improve demodulation reliability, a transport block (transport block, TB)-based multiplexed-modulated repetition transmission scheme is proposed in a conventional technology. However, in the TB-based multiplexed-modulated repetition transmission scheme, an access network device can start a multiplexed modulation procedure on a TB 1 and a TB 2 only after transmission of the two TBs (for example, the TB 1 at a first moment and the TB 2 at a second moment) sent to a same device ends. Therefore, there is a transmission latency.

## SUMMARY

This application provides a communication method and a related apparatus, to shorten a transmission latency.

According to a first aspect, this application provides a communication method. The method includes:

sending at least two transport blocks TBs, where the at least two TBs include a first TB and a second TB, the first TB is a TB corresponding to a first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme; and
sending a third TB if a preset condition is met, where the third TB includes at least one third modulation symbol, the third modulation symbol is obtained by modulating a third bit group based on a third modulation scheme, and the third bit group includes at least one bit in the first bit group and at least one bit in the second bit group.

In a first aspect, when a preset condition is met, a third TB sent by a transmit end includes bit data of TBs of at least two devices (for example, the first device and the second device). Compared with a TB-based multiplexed-modulated repetition transmission scheme, this shortens a transmission latency. In addition, for a receive end (for example, the first device), after receiving the third TB, the first device demodulates the third TB based on the known second TB (that is, correctly decoded data) to obtain the first TB. This can improve demodulation reliability, and reduce a signal-to-noise ratio (signal-to-noise ratio, SNR) requirement on correct decoding. That is, the method further improves communication reliability while ensuring a latency.

In a possible implementation, the sending a third TB if a preset condition is met includes:

sending the third TB if it is determined that the first device fails to decode the first TB and successfully decodes the second TB, and it is determined that the second device successfully decodes the first TB and fails to decode the second TB;
sending the third TB if it is determined that the first device successfully decodes the first TB, and it is determined that the second device successfully decodes the first TB and fails to decode the second TB;
sending the third TB if it is determined that the first device fails to decode the first TB and successfully decodes the second TB, and it is determined that the second device successfully decodes the second TB; or
sending the third TB if a quantity of times of sending the first TB and the second TB is equal to a preset quantity of times.

In this implementation, the transmit end may send the third TB when determining that a device fails to decode a transport block of the device but successfully decodes a transport block of another device, or send the third TB when the quantity of times of sending performed by the transmit end meets the preset quantity of times. Implementations of this solution are diversified, and applicability is high.

In a possible implementation, the method further includes:

receiving first feedback information from the first device, where the first feedback information includes acknowledgement information for the first TB or negative acknowledgement information for the first TB; and
determining, based on the first feedback information, that the first device successfully decodes or fails to decode the first TB; or

receiving second feedback information from the first device, where the second feedback information includes acknowledgement information for the second TB or negative acknowledgement information for the second TB; and

determining, based on the second feedback information, that the first device successfully decodes or fails to decode the second TB; or

receiving third feedback information from the second device, where the third feedback information includes acknowledgement information for the first TB or negative acknowledgement information for the first TB; and

determining, based on the third feedback information, that the second device successfully decodes or fails to decode the first TB; or

receiving fourth feedback information from the second device, where the fourth feedback information includes acknowledgement information for the second TB or negative acknowledgement information for the second TB; and

determining, based on the fourth feedback information, that the second device successfully decodes or fails to decode the second TB.

In this implementation, the receive end may send the feedback information, so that the transmit end determines whether the receive end successfully decodes the TB of the receive end and the TB of the another device. This is highly operable.

In a possible implementation, a transmission resource of the first feedback information is a first transmission resource, a transmission resource of the second feedback information is a second transmission resource, a transmission resource of the third feedback information is a third transmission resource, and a transmission resource of the fourth feedback information is a fourth transmission resource; and the first transmission resource and the second transmission resource are different, and the third transmission resource and the fourth transmission resource are different.

The first transmission resource corresponds to the first TB, and the second transmission resource corresponds to the second TB; and the third transmission resource corresponds to the first TB, and the fourth transmission resource corresponds to the second TB.

In this implementation, the first device may feed back feedback information for different TBs on different resources, to distinguish a specific TB for which the feedback information is sent. This is highly operable.

In a possible implementation, a transmission resource of the first feedback information is a first transmission resource, a transmission resource of the second feedback information is a second transmission resource, a transmission resource of the third feedback information is a third transmission resource, and a transmission resource of the fourth feedback information is a fourth transmission resource; and the first transmission resource and the second transmission resource are the same, and the third transmission resource and the fourth transmission resource are the same.

The first feedback information includes first indication information, and the first indication information indicates that the first feedback information is feedback for the first TB.

The second feedback information includes second indication information, and the second indication information indicates that the second feedback information is feedback for the second TB.

The third feedback information includes third indication information, and the third indication information indicates that the third feedback information is feedback for the first TB.

The fourth feedback information includes fourth indication information, and the fourth indication information indicates that the fourth feedback information is feedback for the second TB.

In this implementation, when the first device feeds back feedback information for different TBs by using a same transmission resource, the feedback information for the different TBs may be distinguished in a manner of carrying indication information in the sent feedback information. Implementations are diversified, and applicability is high.

In a possible implementation, the method further includes:

sending at least two pieces of bandwidth part BWP configuration information, where the at least two pieces of BWP configuration information include first BWP configuration information corresponding to the first device and second BWP configuration information corresponding to the second device, the first BWP configuration information indicates receiving of first control information, and the second BWP configuration information indicates receiving of second control information; and

sending at least two pieces of control information, where the at least two pieces of control information include the first control information and the second control information, the first control information indicates receiving of the first TB, and the second control information indicates receiving of the second TB.

In this implementation, the transmit end sends the at least two pieces of BWP configuration information, and correspondingly, each receive end receives the at least two pieces of BWP configuration information. Therefore, each receive end may receive the at least two pieces of control information based on the at least two pieces of BWP configuration information, and further receive the at least two TBs based on the at least two pieces of control information. Herein, one piece of control information indicates receiving of one TB. That is, based on this implementation, the receive end may further receive the TB of the another device in addition to the TB of the receive end. Therefore, this helps subsequently demodulate the TB of the receive end based on the decoded TB of the another device, thereby improving demodulation reliability.

In a possible implementation, the first configuration information includes a first control resource set CORESET and a first search space, the second configuration information includes a second CORESET and a second search space, the first search space is associated with a first radio network temporary identifier RNTI, and the second search space is associated with a second RNTI.

In a possible implementation, the first CORESET and the second CORESET are the same or different, the first search space and the second search space are the same or different, and the first RNTI and the second RNTI are the same or different.

In this implementation, same information is configured, so that overheads of sending the control information by the transmit end can be reduced, and blind detection overheads at the receive end can also be reduced. In addition, in a factory scenario, when users belong to a same factory, there is no user privacy problem. Different information is configured, so that forward compatibility of a protocol can be implemented, and applicability is high.

In a possible implementation, the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

In this implementation, blind detection overheads at the receive end can be reduced by using the first group-RNTI.

In a possible implementation, the first control information includes fifth indication information, the fifth indication information indicates that the first TB corresponds to the first device, the second control information includes sixth indication information, and the sixth indication information indicates that the second TB corresponds to the second device.

In this implementation, the information indicating the TB is carried in the control information, so that each device can identify a TB packet of the device. For example, assuming that there are two devices, two users may be indicated by using one bit. For example, 0 indicates UE 1, and 1 indicates UE 2.

In a possible implementation, the method further includes:
sending third control information, where the third control information includes a common information field, a first dedicated information field, and a second dedicated information field, the common information field and the first dedicated information field indicate receiving of the first TB, and the common information field and the second dedicated information field indicate receiving of the second TB.

In this implementation, one piece of control information (namely, the third control information) may indicate receiving of TBs of a plurality of devices (for example, two devices), that is, the TBs of the two devices can be received by decoding only one piece of control information. In comparison with a solution in which one piece of control information indicates receiving of a TB of one device, in this implementation, this user does not need to know information about another user, so that user privacy can be protected. In addition, this can also reduce blind detection overheads of the user, reduce decoding complexity, and shorten a decoding latency.

In a possible implementation, the method further includes:
sending third BWP configuration information, where the third BWP configuration information indicates receiving of the third control information, the third configuration information includes a third CORESET and a third search space, and the third search space is associated with a second group-RNTI.

In this implementation, overheads of sending the control information by the transmit end can be reduced by using the second group-RNTI, and blind detection overheads at the receive end can be further reduced.

In a possible implementation, the method further includes:

sending fourth BWP configuration information, where the fourth BWP configuration information indicates receiving of fourth control information; and sending the fourth control information, where the fourth control information indicates receiving of the third TB.

In a possible implementation, the method further includes:
sending seventh indication information and eighth indication information, where the seventh indication information indicates a modulation scheme used by a TB, and the eighth indication information indicates a modulation rule of the TB.

In a possible implementation, the seventh indication information and the eighth indication information are carried in BWP configuration information, the seventh indication information and the eighth indication information are carried in control information, or the seventh indication information and the eighth indication information are predefined in a protocol.

According to a second aspect, this application provides a communication method. The method is applied to a first device, and the method includes:

receiving at least two transport blocks TBs, where the at least two TBs include a first TB and a second TB, the first TB is a TB corresponding to the first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme; and

receiving a third TB, where the third TB includes at least one third modulation symbol, the third modulation symbol is obtained by modulating a third bit group based on a third modulation scheme, and the third bit group includes at least one bit in the first bit group and at least one bit in the second bit group.

In a possible implementation, the method further includes:

decoding the first TB, and sending first feedback information, where the first feedback information includes acknowledgement information for the first TB or negative acknowledgement information for the first TB; and
decoding the second TB, and sending second feedback information, where the second feedback information includes acknowledgement information for the second TB or negative acknowledgement information for the second TB.

In a possible implementation, a transmission resource of the first feedback information is a first transmission resource, and a transmission resource of the second feedback information is a second transmission resource; and the first transmission resource and the second transmission resource are different.
The first transmission resource corresponds to the first TB, and the second transmission resource corresponds to the second TB.
In a possible implementation, a transmission resource of the first feedback information is a first transmission resource, and a transmission resource of the second feedback information is a second transmission resource; and the first transmission resource and the second transmission resource are the same.
The first feedback information and third feedback information include first indication information, and the first indication information indicates that the first feedback information is feedback for the first TB.
The second feedback information includes second indication information, and the second indication information indicates that the second feedback information is feedback for the second TB.
In a possible implementation, the method further includes:

receiving at least two pieces of bandwidth part BWP configuration information, where the at least two pieces of BWP configuration information include first BWP configuration information corresponding to the first device and second BWP configuration information corresponding to the second device, the first BWP configuration information indicates receiving of first control information, and the second BWP configuration information indicates receiving of second control information; and
receiving at least two pieces of control information based on the at least two pieces of BWP configuration information, where the at least two pieces of control information include the first control information and the second control information, the first control information indicates receiving of the first TB, and the second control information indicates receiving of the second TB.

In a possible implementation, the first configuration information includes a first control resource set CORESET and a first search space, the second configuration information includes a second CORESET and a second search space, the first search space is associated with a first radio network temporary identifier RNTI, and the second search space is associated with a second RNTI.
In a possible implementation, the first CORESET and the second CORESET are the same or different, the first search space and the second search space are the same or different, and the first RNTI and the second RNTI are the same or different.
In a possible implementation, the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.
In a possible implementation, the first control information includes fifth indication information, the fifth indication information indicates that the first TB corresponds to the first device, the second control information includes sixth indication information, and the sixth indication information indicates that the second TB corresponds to the second device.
In a possible implementation, the method further includes:
receiving third control information, where the third control information includes a common information field, a first dedicated information field, and a second dedicated information field, the common information field and the first dedicated information field indicate receiving of the first TB, and the common information field and the second dedicated information field indicate receiving of the second TB.
In a possible implementation, the method further includes:
receiving third BWP configuration information, where the third BWP configuration information indicates receiving of the third control information, the third configuration information includes a third CORESET and a third search space, and the third search space is associated with a second group-RNTI.

In a possible implementation, the method further includes:

receiving fourth BWP configuration information, where the fourth BWP configuration information indicates receiving of fourth control information; and receiving the fourth control information based on the fourth BWP configuration information, where the fourth control information indicates receiving of the third TB.

In a possible implementation, the method further includes:
receiving seventh indication information and eighth indication information, where the seventh indication information indicates a modulation scheme used by a TB, and the eighth indication information indicates a modulation rule of the TB.

In a possible implementation, the seventh indication information and the eighth indication information are carried in BWP configuration information, the seventh indication information and the eighth indication information are carried in control information, or the seventh indication information and the eighth indication information are predefined in a protocol.

According to a third aspect, this application provides a communication apparatus. The apparatus includes:

a transceiver unit, configured to send at least two transport blocks TBs, where the at least two TBs include a first TB and a second TB, the first TB is a TB corresponding to a first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme; and a processing unit, configured to send a third TB via the transceiver unit if a preset condition is met, where the third TB includes at least one third modulation symbol, the third modulation symbol is obtained by modulating a third bit group based on a third modulation scheme, and the third bit group includes at least one bit in the first bit group and at least one bit in the second bit group.

In a possible implementation, the processing unit is configured to:

send the third TB via the transceiver unit if it is determined that the first device fails to decode the first TB and successfully decodes the second TB, and it is determined that the second device successfully decodes the first TB and fails to decode the second TB;
send the third TB via the transceiver unit if it is determined that the first device successfully decodes the first TB, and it is determined that the second device successfully decodes the first TB and fails to decode the second TB;
send the third TB via the transceiver unit if it is determined that the first device fails to decode the first TB and successfully decodes the second TB, and it is determined that the second device successfully decodes the second TB; or
send the third TB via the transceiver unit if a quantity of times of sending the first TB and the second TB is equal to a preset quantity of times.

In a possible implementation,

the transceiver unit is configured to receive first feedback information from the first device, where the first feedback information includes acknowledgement information for the first TB or negative acknowledgement information for the first TB; and the processing unit is configured to determine, based on the first feedback information, that the first device successfully decodes or fails to decode the first TB.

Alternatively, the transceiver unit is configured to receive second feedback information from the first device, where the second feedback information includes acknowledgement information for the second TB or negative acknowledgement information for the second TB; and the processing unit is configured to determine, based on the second feedback information, that the first device successfully decodes or fails to decode the second TB.

Alternatively, the transceiver unit is configured to receive third feedback information from the second device, where the third feedback information includes acknowledgement information for the first TB or negative acknowledgement information for the first TB; and the processing unit is configured to determine, based on the third feedback information, that the second device successfully decodes or fails to decode the first TB.

Alternatively, the transceiver unit is configured to receive fourth feedback information from the second device, where the fourth feedback information includes acknowledgement information for the second TB or negative acknowledgement information for the second TB; and the processing unit is configured to determine, based on the fourth feedback information, that the second device successfully decodes or fails to decode the second TB.

In a possible implementation, a transmission resource of the first feedback information is a first transmission resource, a transmission resource of the second feedback information is a second transmission resource, a transmission resource of the third feedback information is a third transmission resource, and a transmission resource of the fourth feedback information is a fourth transmission resource; and the first transmission resource and the second transmission resource are different, and the third transmission resource and the fourth transmission resource are different.

The first transmission resource corresponds to the first TB, and the second transmission resource corresponds to the second TB; and the third transmission resource corresponds to the first TB, and the fourth transmission resource corresponds to the second TB.

In a possible implementation, a transmission resource of the first feedback information is a first transmission resource, a transmission resource of the second feedback information is a second transmission resource, a transmission resource of the third feedback information is a third transmission resource, and a transmission resource of the fourth feedback information is a fourth transmission resource; and the first transmission resource and the second transmission resource are the same, and the third transmission resource and the fourth transmission resource are the same.

The first feedback information includes first indication information, and the first indication information indicates that the first feedback information is feedback for the first TB.

The second feedback information includes second indication information, and the second indication information indicates that the second feedback information is feedback for the second TB.

The third feedback information includes third indication information, and the third indication information indicates that the third feedback information is feedback for the first TB.

The fourth feedback information includes fourth indication information, and the fourth indication information indicates that the fourth feedback information is feedback for the second TB.

In a possible implementation, the transceiver unit is further configured to:

send at least two pieces of bandwidth part BWP configuration information, where the at least two pieces of BWP configuration information include first BWP configuration information corresponding to the first device and second BWP configuration information corresponding to the second device, the first BWP configuration information indicates receiving of first control information, and the second BWP configuration information indicates receiving of second control information; and

send at least two pieces of control information, where the at least two pieces of control information include the first control information and the second control information, the first control information indicates receiving of the first TB, and the second control information indicates receiving of the second TB.

In a possible implementation, the first configuration information includes a first control resource set CORESET and a first search space, the second configuration information includes a second CORESET and a second search space, the first search space is associated with a first radio network temporary identifier RNTI, and the second search space is associated with a second RNTI.

In a possible implementation, the first CORESET and the second CORESET are the same or different, the first search space and the second search space are the same or different, and the first RNTI and the second RNTI are the same or different.

In a possible implementation, the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

In a possible implementation, the first control information includes fifth indication information, the fifth indication information indicates that the first TB corresponds to the first device, the second control information includes sixth indication information, and the sixth indication information indicates that the second TB corresponds to the second device.

In a possible implementation, the transceiver unit is further configured to:

send third control information, where the third control information includes a common information field, a first dedicated information field, and a second dedicated information field, the common information field and the first dedicated information field indicate receiving of the first TB, and the common information field and the second dedicated information field indicate receiving of the second TB.

In a possible implementation, the transceiver unit is further configured to:

send third BWP configuration information, where the third BWP configuration information indicates receiving of the third control information, the third configuration information includes a third CORESET and a third search space, and the third search space is associated with a second group-RNTI.

In a possible implementation, the transceiver unit is further configured to:

send fourth BWP configuration information, where the fourth BWP configuration information indicates receiving of fourth control information; and

send the fourth control information, where the fourth control information indicates receiving of the third TB.

In a possible implementation, the transceiver unit is further configured to:
send seventh indication information and eighth indication information, where the seventh indication information indicates a modulation scheme used by a TB, and the eighth indication information indicates a modulation rule of the TB.

In a possible implementation, the seventh indication information and the eighth indication information are carried in BWP configuration information, the seventh indication information and the eighth indication information are carried in control information, or the seventh indication information and the eighth indication information are predefined in a protocol.

According to a fourth aspect, this application provides a communication apparatus. The apparatus is a first device, and the apparatus includes:
a transceiver unit, configured to receive at least two transport blocks TBs, where the at least two TBs include a first TB and a second TB, the first TB is a TB corresponding to the first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme.

The transceiver unit is configured to receive a third TB, where the third TB includes at least one third modulation symbol, the third modulation symbol is obtained by modulating a third bit group based on a third modulation scheme, and the third bit group includes at least one bit in the first bit group and at least one bit in the second bit group.

In a possible implementation, the apparatus further includes a processing unit, and the processing unit is configured to:

decode the first TB, and send first feedback information via the transceiver unit, where the first feedback information includes acknowledgement information for the first TB or negative acknowledgement information for the first TB; and
decode the second TB, and send second feedback information via the transceiver unit, where the second feedback information includes acknowledgement information for the second TB or negative acknowledgement information for the second TB.

In a possible implementation, a transmission resource of the first feedback information is a first transmission resource, and a transmission resource of the second feedback information is a second transmission resource; and the first transmission resource and the second transmission resource are different.

The first transmission resource corresponds to the first TB, and the second transmission resource corresponds to the second TB.

In a possible implementation, a transmission resource of the first feedback information is a first transmission resource, and a transmission resource of the second feedback information is a second transmission resource; and the first transmission resource and the second transmission resource are the same.

The first feedback information and third feedback information include first indication information, and the first indication information indicates that the first feedback information is feedback for the first TB.

The second feedback information includes second indication information, and the second indication information indicates that the second feedback information is feedback for the second TB.

In a possible implementation, the transceiver unit is further configured to:

receive at least two pieces of bandwidth part BWP configuration information, where the at least two pieces of BWP configuration information include first BWP configuration information corresponding to the first device and second BWP configuration information corresponding to the second device, the first BWP configuration information indicates receiving of first control information, and the second BWP configuration information indicates receiving of second control information; and
receive at least two pieces of control information based on the at least two pieces of BWP configuration information, where the at least two pieces of control information include the first control information and the second control information, the first control information indicates receiving of the first TB, and the second control information indicates receiving of the second TB.

In a possible implementation, the first configuration information includes a first control resource set CORESET and a first search space, the second configuration information includes a second CORESET and a second search space, the first search space is associated with a first radio network temporary identifier RNTI, and the second search space is associated with a second RNTI.

In a possible implementation, the first CORESET and the second CORESET are the same or different, the first search space and the second search space are the same or different, and the first RNTI and the second RNTI are the same or different.

In a possible implementation, the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

In a possible implementation, the first control information includes fifth indication information, the fifth indication information indicates that the first TB corresponds to the first device, the second control information includes sixth indication information, and the sixth indication information indicates that the second TB corresponds to the second device.

In a possible implementation, the transceiver unit is further configured to:

receive third control information, where the third control information includes a common information field, a first dedicated information field, and a second dedicated information field, the common information field and the first dedicated information field indicate receiving of the first TB, and the common information field and the second dedicated information field indicate receiving of the second TB.

In a possible implementation, the transceiver unit is further configured to:

receive third BWP configuration information, where the third BWP configuration information indicates receiving of the third control information, the third configuration information includes a third CORESET and a third search space, and the third search space is associated with a second group-RNTI.

In a possible implementation, the transceiver unit is further configured to:

receive fourth BWP configuration information, where the fourth BWP configuration information indicates receiving of fourth control information; and
receive the fourth control information based on the fourth BWP configuration information, where the fourth control information indicates receiving of the third TB.

In a possible implementation, the transceiver unit is further configured to:

receive seventh indication information and eighth indication information, where the seventh indication information indicates a modulation scheme used by a TB, and the eighth indication information indicates a modulation rule of the TB.

In a possible implementation, the seventh indication information and the eighth indication information are carried in BWP configuration information, the seventh indication information and the eighth indication information are carried in control information, or the seventh indication information and the eighth indication information are predefined in a protocol.

According to a fifth aspect, this application provides a communication apparatus, including a processor, a transceiver, and a memory. The processor, the transceiver, and the memory are coupled, and the memory stores a computer program. The processor and the transceiver are configured to invoke the computer program in the memory, to enable the communication apparatus to perform the method according to any one of the first aspect.

In a possible design, the communication apparatus may be a chip that implements the method in the first aspect or a device that includes the chip.

According to a sixth aspect, this application provides a communication apparatus. The communication apparatus may be a first device, and includes a processor, a transceiver, and a memory. The processor, the transceiver, and the memory are coupled, and the memory stores a computer program. The processor and the transceiver are configured to invoke the computer program in the memory, to enable the communication apparatus to perform the method according to any one of the second aspect.

In a possible design, the communication apparatus may be a chip that implements the method in the second aspect or a device that includes the chip.

According to a seventh aspect, this application provides a communication apparatus, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect by using a logic circuit or by executing code instructions.

According to an eighth aspect, this application provides a communication apparatus. The communication apparatus may be a first device, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the second aspect by using a logic circuit or by executing code instructions.

According to a ninth aspect, this application provides a computer-readable storage medium. The storage medium stores a computer program or instructions. When the computer program or the instructions are executed by a computer, the method according to any one of the first aspect is implemented.

According to a tenth aspect, this application provides a computer-readable storage medium. The storage medium stores a computer program or instructions. When the computer program or the instructions are executed by a computer, the method according to any one of the second aspect is implemented.

According to an eleventh aspect, this application provides a computer program product. When a computer reads and executes the computer program product, the computer is enabled to perform the method according to any one of the first aspect.

According to a twelfth aspect, this application provides a computer program product. When a computer reads and executes the computer program product, the computer is enabled to perform the method according to any one of the second aspect.

According to a thirteenth aspect, this application provides a communication system. The communication system includes the communication apparatus according to the first aspect and the communication apparatus according to the second aspect.

## BRIEF DESCRIPTION OF DRAWINGS

FIG. 1 is a diagram of a network architecture of a communication system;
FIG. 2 is a diagram of a network architecture of another communication system;
FIG. 3 is a diagram of a network architecture of another communication system;
FIG. 4 is a diagram of a network architecture of another communication system;
FIG. 5 is a diagram of a network architecture of another communication system;
FIG. 6a is a diagram of a TB-based multiplexed-modulated repetition transmission scheme;
FIG. 6b is a diagram of a multiplexed modulation constellation diagram;
FIG. 7 is a schematic flowchart of a communication method according to an embodiment of this application;
FIG. 8a is a diagram of a scenario of a multiplexed modulation scheme with an ACK/NACK feedback according to an embodiment of this application;
FIG. 8b is a diagram of a scenario of a multiplexed modulation scheme with only an ACK feedback according to an embodiment of this application;
FIG. 9 is a diagram of a scenario of a random user pairing-based multiplexed modulation scheme according to an embodiment of this application;
FIG. 10 is another schematic flowchart of a communication method according to an embodiment of this application;
FIG. 11 is a diagram of a scenario of a blind retransmission-based multiplexed modulation scheme according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. "And/or" in this specification describes only an association relationship between associated objects and represents that three relationships may exist. For example, A and/or B may represent the following three cases: Only A exists, both A and B exist, and only B exists. A and B may be singular or plural. In addition, "at least one" means one or more, and "a plurality of" means two or more. "One or more of the following: ...", "at least one of ...", and similar expressions thereof mean any combination of the listed items. For example, "one or more of the following: A, B, or C" may represent the following six cases: only A exists, only B exists, only C exists, both A and B exist, both B and C exist, both A and C exist, and A, B, and C exist, where A, B, and C may be singular or plural. The terms such as "first" and "second" do not limit a quantity and an execution sequence, and the terms such as "first" and "second" do not indicate a definite difference.

In this application, the term "example" or "for example" is used to represent giving an example, an illustration, or a description. Any embodiment or design solution described as an "example" or "for example" in this application should not be explained as being more preferred or having more advantages than another embodiment or design solution. To be precise, use of the word like "example" or "for example" is intended to present a relative concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

The technical solutions in embodiments of this application may be applied to various communication systems, for example, a long term evolution (long term evolution, LTE) system, a wireless fidelity (wireless-fidelity, Wi-Fi) system, a worldwide interoperability for microwave access (worldwide interoperability for microwave access, WiMAX) communication system, a 5th generation (5th generation, 5G) system or a new radio (new radio, NR) system, and a future communication system. This is not limited herein. For another example, the communication systems are a satellite communication system, an inter-satellite communication system, and a wireless projection system. For another example, the communication systems are a narrowband internet of things (narrow band-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA 2000) system, a time division-synchronous code division multiple access (time division- synchronous code division multiple access, TD-SCDMA) system, a long term evolution (long term evolution, LTE) system, and three major application scenarios of a next-generation 5G mobile communication system: enhanced mobile broadband (enhanced mobile broadband, eMBB), URLLC, and enhanced machine-type communication (enhanced Machine-Type Communication, eMTC).

It should be noted that this application is applicable to a plurality of application scenarios, for example, the URLLC, a relay (Relay), user-to-user mesh (UE Mesh), integrated access and backhaul, user equipment (user equipment, UE) cooperation, high-frequency transmission, an industrial scenario (for example, a factory scenario without user privacy), robot collaboration, and an optical communication scenario. Optionally, transmission such as uplink transmission, downlink transmission, or sidelink (sidelink, SL) transmission is not limited in this application. Optionally, in this application, a transmit end of a TB may be an access network device, and a receive end of the TB may be a terminal device; a transmit end of a TB may be a terminal device, and a receive end of the TB may be an access network device; a transmit end of a TB may be an access network device, and a receive end of the TB may alternatively be an access network device; or a transmit end of a TB may be a terminal device, and a receive end of the TB may alternatively be a terminal device. This is not limited herein. That is, a first device and/or a second device in embodiments of this application may be an access network device or a terminal device, and a third device in embodiments of this application may be an access network device, a terminal device, or the like. This is not limited herein.

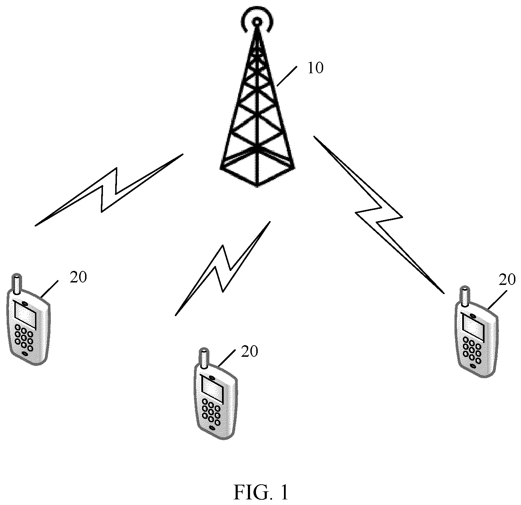

FIG. 1 is a diagram of a network architecture of a communication system. As shown in FIG. 1, the communication system may include one or more access network devices 10 (only one access network device 10 is shown) and one or more terminal devices 20 that communicate with each access network device 10. FIG. 1 is merely a diagram, and does not constitute a limitation on an applicable scenario of the technical solutions provided in this application.

The terminal device includes a device that provides a user with voice and/or data connectivity, for example, may include a handheld device having a wireless connection function, or a processing device connected to a wireless modem. The terminal device may communicate with a core network through a radio access network. The terminal device may include user equipment (user equipment, UE), a wireless terminal device, a mobile terminal device, a device-to-device (device-to-device, D2D) communication terminal device, a vehicle-to-everything (vehicle to everything, V2X) terminal device, a machine-to-machine/machine type communications (machine-to-machine/machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, or a user apparatus. For example, the terminal device may include a mobile phone (or referred to as a "cellular" phone), a computer having a mobile terminal device, a portable, pocket-sized, handheld, or a computer-embedded mobile apparatus, or the like. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability.

The access network device may include a new generation NodeB (generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseband unit, BBU), a transmission reception point (transmitting and receiving point, TRP), a transmission point (transmitting point, TP), a mobile switching center, and the like. This is not limited herein.

The access network device may further include one or more central units (central units, CUs), one or more distributed units (distributed unit, DU), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform).

In embodiments of this application, an apparatus configured to implement the function of the access network device may be an access network device, or may be an apparatus that can support the access network device in implementing the function, for example, a chip system, or a combined device or component that can implement the function of the access network device. The apparatus may be installed in the access network device. In embodiments of this application, the chip system may include a chip, or may include a chip and another discrete device.

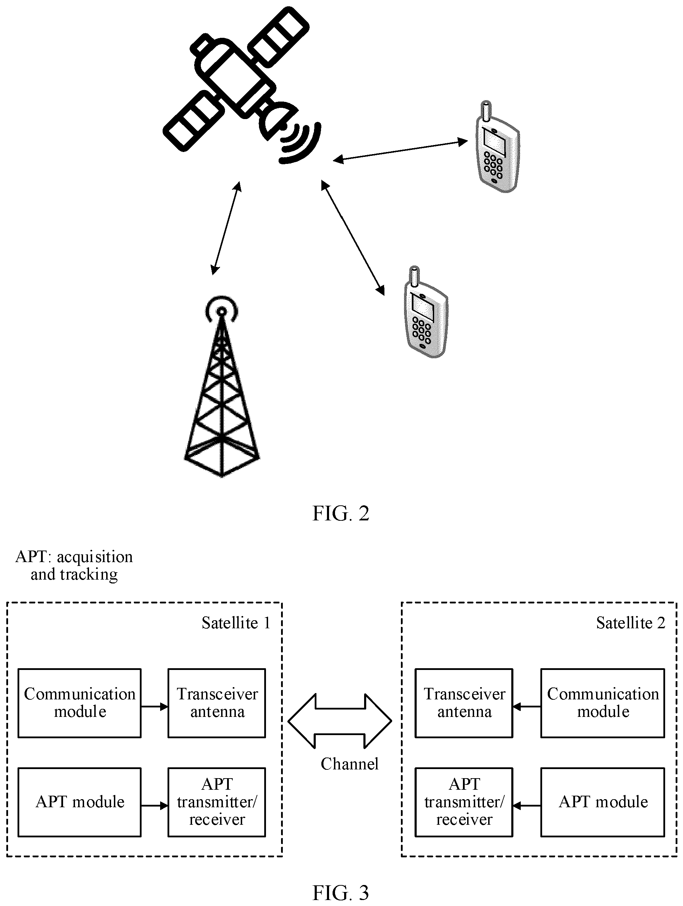

Optionally, FIG. 2 is a diagram of a network architecture of another communication system. As shown in FIG. 2, the communication system is a satellite communication system, and includes a satellite base station and a terminal-type network element (for example, a terminal device is used). The satellite base station provides a communication service for the terminal device. The satellite base station transmits downlink data to the terminal device, where the data is encoded through channel encoding, and data obtained through channel encoding is transmitted to the terminal device through constellation modulation; and the terminal device transmits uplink data to the satellite base station, where the uplink data may also be encoded through channel encoding, and data obtained through encoding is transmitted to the satellite base station through the constellation modulation. The satellite base station may also communicate with a base station. A satellite may be used as a base station, or may be used as a terminal device. The satellite may be an uncrewed aerial vehicle, a hot air balloon, a low-orbit satellite, a medium-orbit satellite, a high-orbit satellite, or the like. The satellite may alternatively be a non-terrestrial base station, a non-terrestrial device, or the like.

Optionally, FIG. 3 is a diagram of a network architecture of another communication system. As shown in FIG. 3, the communication system is an inter-satellite link communication system (referred to as an inter-satellite communication system). The inter-satellite link communication system may include two parts: a acquisition and tracking (pointing and tracking, APT) subsystem and a communication subsystem. The communication subsystem is responsible for inter-satellite information transmission, and is a main body of the inter-satellite communication system. An APT system is responsible for acquisition, pointing, and tracking between satellites. Determining an incoming direction of an incident signal is acquisition, adjusting a transmitted wave to point to a receiving direction is pointing, and continuously adjusting pointing and acquisition in an entire communication process is tracking. To minimize impact of attenuation and interference on a channel and require high confidentiality and a high transmission rate, the APT needs to be adjusted in real time to continuously adapt to changes. All existing APT systems are optical systems. A disadvantage is that optical pointing is difficult, and a direction needs to be adjusted mechanically. Most of the existing communication subsystems are optical communication systems, and there are some microwave band systems in which a single high-gain antenna is usually used. The existing APT system and communication subsystem are independent systems. A disadvantage is that optical communication is easily affected by vibration and the like, and a rate is unstable. A millimeter wave frequency is low, a communication capacity is low, and an antenna direction needs to be adjusted mechanically.

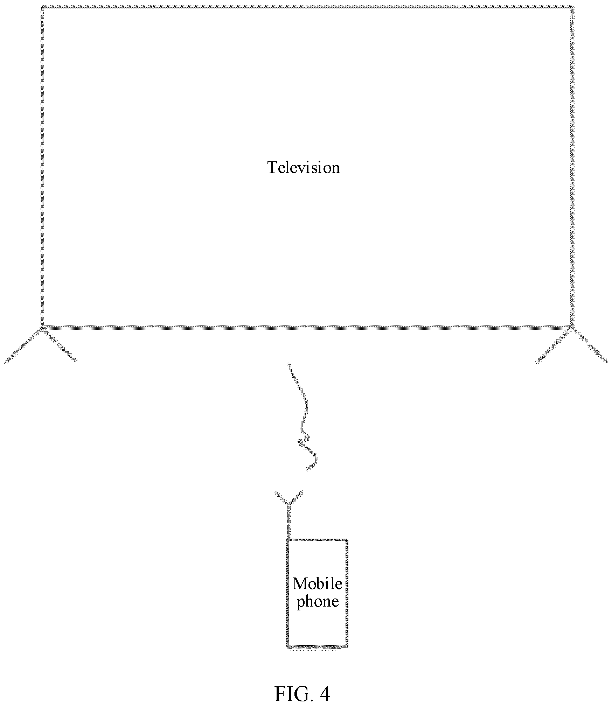

Optionally, FIG. 4 is a diagram of a network architecture of another communication system. As shown in FIG. 4, the communication system is a wireless projection system. The wireless projection system includes a projection device and a projected device. In FIG. 3, the projection device is a mobile phone, and the projected device is a television.

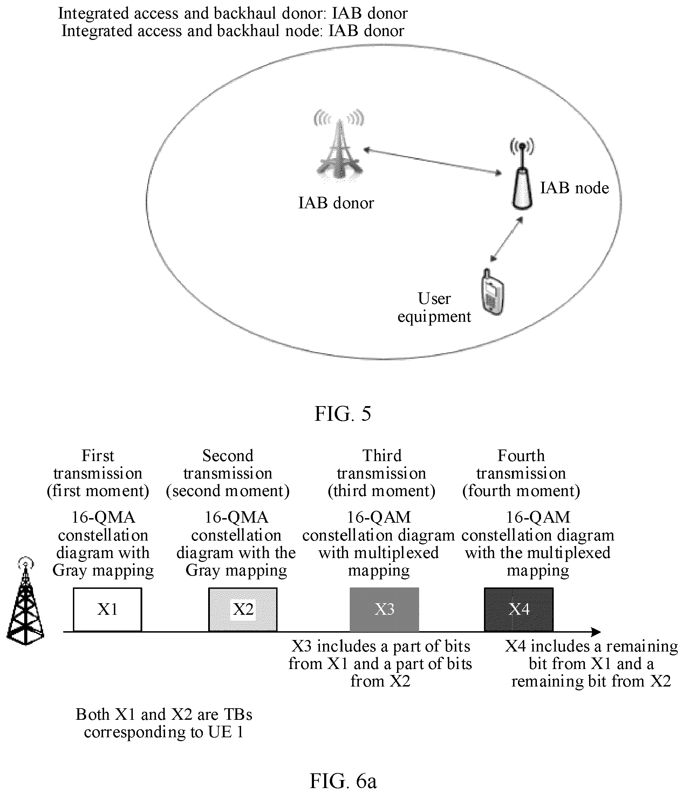

Optionally, FIG. 5 is a diagram of a network architecture of another communication system. As shown in FIG. 5, the communication system is an integrated access and backhaul (integrated access and backhaul, IAB) system, and may include an IAB donor (IAB Donor), an IAB node (IAB node), and user equipment. A link between the IAB donor and the IAB node is a backhaul link (backhaul link), and a link between the user equipment and the IAB node is an access link (access link).

It should be noted that, for ease of understanding, the following embodiments of this application are mainly described by using downlink transmission as an example.

It should be noted that URLLC is one of three major application scenarios of 5G, and is also a typical scenario of 5G that is different from 2G/3G/4G. As a breakthrough for the mobile communication industry to enter vertical industries, the URLLC is quite critical to wide application of fields such as self-driving, industrial manufacturing, the internet of vehicles, and a smart grid.

The URLLC scenario is mainly characterized by a low latency and high reliability. The URLLC scenario has a quite large usage scope, and has different requirements on a latency, reliability, and a bandwidth in different scenarios. Specifically, the URLLC includes at least a power automation "three remote" scenario, an internet of vehicles scenario, and an industrial manufacturing scenario. A requirement on a low latency and high reliability in the industrial manufacturing scenario is the most challenging. The following mainly describes the industrial manufacturing scenario.

In the industrial manufacturing scenario, a manufacturing device in a smart factory accesses an enterprise cloud or an onsite control system through 5G, collects onsite environment data and production data, and analyzes a production status in real time, to implement unmanned and wireless automation of an entire production line. Intelligent industrial manufacturing has a quite high requirement on technical performance, and high-end manufacturing has a quite high requirement on a latency and stability of workshop equipment. Specifically, the industry for the smart factory proposes a very specific performance requirement. For example, there are no more than 50 users in a service area, and in end-to-end latency of 1 ms, communication service availability (communication system available, CSA) of a transport block with a size of 40 bytes needs to be between 99.9999% and 99.999999%. The CSA is defined as follows: If a packet received by a receive end is damaged or is not received in time (where an allowed maximum end-to-end latency is exceeded), the service is considered to be unavailable.

6G accelerates comprehensive digital transformation of vertical industries. As one of key 6G technologies, the URLLC faces a higher latency and reliability requirement to adapt to various vertical applications. Specifically, future 6G URLLC services need to meet that an air interface latency is less than 0.1 ms, and reliability is greater than 99.99999% or 99.999999%. To improve demodulation reliability, a TB-based multiplexed-modulated repetition transmission scheme is proposed in a conventional technology. However, in the TB-based multiplexed-modulated repetition transmission scheme, an access network device can start a multiplexed modulation procedure on a TB 1 and a TB 2 only after transmission of the two TBs (for example, the TB 1 at a first moment and the TB 2 at a second moment) sent to a same device ends. Therefore, there is a transmission latency. Specifically, a new constellation diagram (namely, a constellation diagram with multiplexed modulation, or referred to as a constellation diagram with multiplexed mapping) and a constellation diagram mapping rule are designed for the TB-based multiplexed-modulated repetition transmission scheme, where sent TBs are TBs for a same device. For example, a first device is used as an example. At a first moment, a transmit end sends a TB 1 to the first device based on a 16-QAM constellation diagram; at a second moment, the transmit end sends a TB 2 to the first device based on the 16-QAM constellation diagram; at a third moment, the transmit end sends a first half of bits from the TB 1 and a first half of bits from the TB 2 to the first device based on the new constellation diagram; and at a fourth moment, a second half of bits from the TB 1 and a second half of bits from the TB 2 are sent to the first device based on the new constellation diagram. The constellation diagram at the third moment (or the fourth moment) includes some bits from the TB 1 at the first moment and the TB 2 at the second moment. In this case, the transmit end can start one retransmission of a bit string at the third moment and the fourth moment only after transmission of two TBs (for example, the TB 1 at the first moment and the TB 2 at the second moment) ends. However, there is a transmission latency between the TB 1 at the first moment and the TB 2 at the second moment. For example, in a periodic factory scenario, a transmission latency between TBs is up to 2 ms. In this case, time from the first moment to the fourth moment far exceeds a latency requirement 0.1 ms in 6G. Therefore, there is an excessively long latency in the existing TB-based multiplexed-modulated repetition transmission scheme.

For example, FIG. 6a is a diagram of a TB-based multiplexed-modulated repetition transmission scheme. As shown in FIG. 6a, a processing procedure of a transmit end is as follows.

First moment:

The transmit end (a downlink is used as an example, and the transmit end is a base station) sends X1 to a receive end (the downlink is used as an example, and the receive end is UE 1) based on an existing 16-QAM constellation diagram with Gray mapping. X1 is a TB corresponding to the UE 1, for example, a TB 1.

Second moment:

The transmit end sends X2 to the receive end based on the existing 16-QAM constellation diagram with the Gray mapping. X2 is a TB corresponding to the UE 1, for example, a TB 2. It should be noted that X1 and X2 are formed through CRC check, channel encoding, and code block multiplexing. Lengths of X1 and X2 are equal. Herein, an example in which the lengths of X1 and X2 are 4 bits is mainly used.

Third moment:

A half of bits are selected from each of X1 and X2 according to a predefined rule. The predefined rule may be: a first half of bits from X1 and a first half of bits from X2.

Then, the base station maps the half of bits from X1 and the half of bits from X2 (that is, X3) to a multiplexed modulation constellation diagram, for example, a 16-QAM constellation diagram with multiplexed mapping, and a mapping rule is predefined as follows: Two bits from X1 may be mapped to first two bits at a constellation point, and two bits from X2 may be mapped to last two bits at the constellation point; two bits from X1 are mapped to a $1^{st}$ bit and a $3^{rd}$ bit at a constellation point, and two bits from X2 are mapped to a $2^{nd}$ bit and a $4^{th}$ bit at the constellation point; or two bits from X1 are mapped to a $1^{st}$ bit and a $4^{th}$ bit at a constellation point, and two bits from X2 are mapped to a $2^{nd}$ bit and a $3^{rd}$ bit at the constellation point. (X1 and X2 may be changed in the foregoing predefined rule. The following procedure is described by mapping the two bits from X1 to the first two bits at the constellation point and mapping the two bits from X2 to the last two bits at the constellation point.) After constellation mapping is completed, a symbol is sent to the UE 1.

Fourth moment:

The base station extracts remaining bits from X1 and X2, maps the remaining bits (that is, X4) from X1 and X2 to 16 QAM with the multiplexed mapping according to the same mapping rule, and sends a modulation symbol to the UE 1.

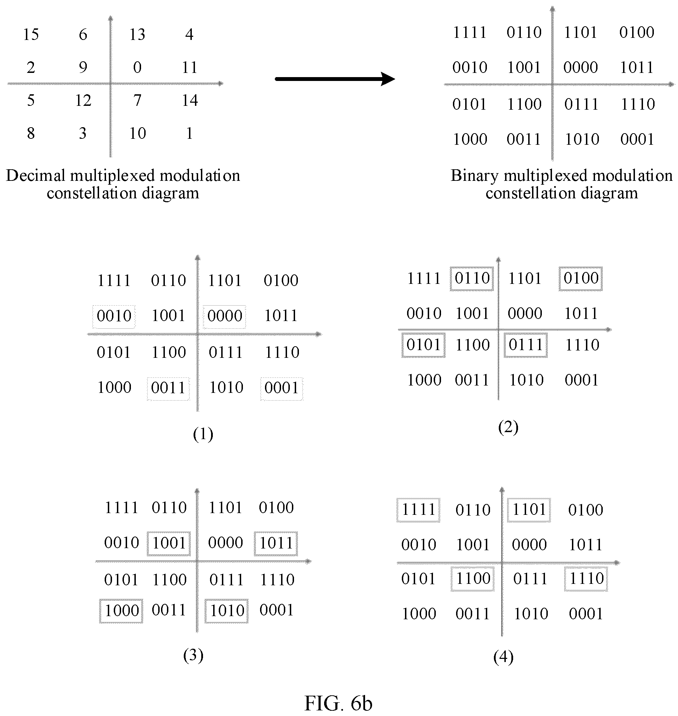

For example, FIG. 6b is a diagram of a multiplexed modulation constellation diagram. As shown in FIG. 6b, each quadrant of a decimal multiplexed modulation constellation diagram includes four constellation points, and values at constellation points are decimal values. It may be understood that a binary multiplexed modulation constellation diagram may be obtained by converting a decimal value into a binary value, where a value at each constellation point in the binary multiplexed modulation constellation diagram is represented in binary (that is, by using 4 bits). Horizontal coordinates corresponding to constellation points in the multiplexed modulation constellation diagram are [-3A, -A, A, 3A], and vertical coordinates are [-3A, -A, A, 3A]. A is a normalization factor, for example, $A = 1/\sqrt{10}$ .

It should be noted that the multiplexed modulation constellation diagram has the following feature: When the receive end knows first two bits or last two bits, a minimum Euclidean distance between constellation points increases by two times. For example, it is assumed that values of the first two bits are known.

For example, when the first two bits are 00, and corresponding constellation points are four constellation points marked with shadow in (1) in FIG. 6b, the minimum Euclidean distance is doubled compared with that of 16 QAM.

For another example, when the first two bits are 01, and corresponding constellation points are four constellation points marked with shadow in (2) in FIG. 6b, the minimum Euclidean distance is doubled compared with that of 16 QAM.

For another example, when the first two bits are 10, and corresponding constellation points are four constellation points marked with shadow in (3) in FIG. 6b, the minimum Euclidean distance is doubled compared with that of 16 QAM.

For another example, when the first two bits are 11, and corresponding constellation points are four constellation points marked with shadow in (4) in FIG. 6b, the minimum Euclidean distance is doubled compared with that of 16 QAM.

It can be learned from FIG. 6b that, regardless of which one example of the first two bits is 00, 01, 10, or 11, the minimum Euclidean distance increases by the two times, so that a decoding success rate of the receive end can be increased, and an SNR needed for decoding can be reduced. That is, when a plurality of transport blocks are transmitted by using the multiplexed modulation constellation diagram, when the receive end knows information about some of the transport blocks, prior information may be converted into a gain obtained by increasing the minimum Euclidean distance, to obtain better demodulation performance.

It should be noted that the transport blocks X1 and X2 defined in the TB-based multiplexed-modulated repetition transmission solution are formed through the CRC check, the channel encoding, rate matching, and the code block multiplexing. In the TB-based multiplexed-modulated repetition transmission scheme, the constellation diagram at the third moment (or the fourth moment) includes some bits from X1 at the first moment and X2 at the second moment. In this case, the transmit end can start one retransmission at the third moment and the fourth moment only after transmission of two TB packets (for example, the TB packet X1 at the first moment and the TB packet X2 at the second moment) ends. However, there is a transmission latency between the TB packet at the first moment and the TB packet at the second moment. For example, in a periodic factory scenario, a transmission latency between TB packets is up to 2 ms. In this case, time from the first moment to the fourth moment far exceeds a latency requirement 0.1 ms in 6G. Therefore, there is an excessively long latency in the existing TB-based multiplexed-modulated repetition transmission scheme.

Based on this, an embodiment of this application provides a communication method, to shorten a transmission delay.

The following describes in detail the communication method and a communication apparatus provided in this application.

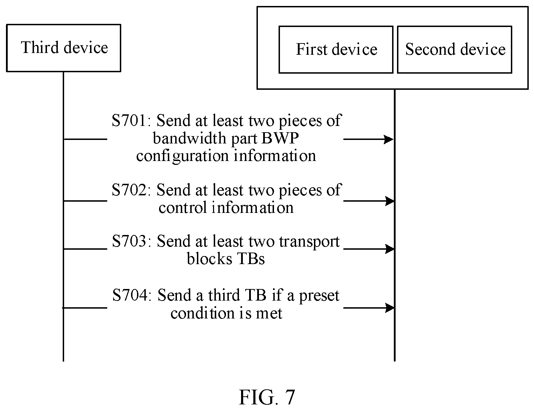

FIG. 7 is a schematic flowchart of a communication method according to an embodiment of this application. The method may be performed by a first device, a second device, and a third device, or may be performed by chips in the first device, the second device, and the third device. For ease of description, the following mainly uses the first device, the second device, and the third device as execution bodies for description. The method shown in FIG. 7 may include the following operations.

S701: The third device sends at least two pieces of bandwidth part (bandwidth part, BWP) configuration information. Correspondingly, the first device receives the at least two pieces of BWP configuration information from the third device, and the second device receives the at least two pieces of BWP configuration information from the third device.

In some feasible implementations, the at least two pieces of BWP configuration information sent by the third device may include first BWP configuration information corresponding to the first device and second BWP configuration information corresponding to the second device, and the first device and the second device belong to a same device group. Optionally, the at least two pieces of BWP configuration information may further include BWP configuration information corresponding to another device, for example, BWP configuration information corresponding to the third device or BWP configuration information corresponding to a fourth device. Examples are not listed one by one herein.

Usually, a plurality of devices with a same physical location or similar physical locations may be grouped into a same device group. That is, the device group to which the first device and the second device belong may further include the third device, the fourth device, and the like. This is not limited herein. The first BWP configuration information indicates receiving of first control information, and the second BWP configuration information indicates receiving of second control information. That is, the first device receives the first BWP configuration information and the second BWP configuration information from the third device, so that the first device may receive the first control information based on the first BWP configuration information, and receive the second control information based on the second BWP configuration information. Similarly, the second device receives the first BWP configuration information and the second BWP configuration information from the third device, so that the second device may receive the first control information based on the first BWP configuration information, and receive the second control information based on the second BWP configuration information. Optionally, the control information may further include one or more pieces of information such as a time/frequency resource indication, a demodulation reference signal (demodulation reference signal, DMRS) sequence, a modulation and coding scheme (modulation and coding scheme, MCS) indication, a hybrid automatic repeat request (hybrid automatic repeat request, HARQ) identifier (identity, ID), and a new data indicator (new data indicator, NDI). This is not limited herein.

It may be understood that, in a downlink transmission scenario, the control information in this application is downlink control information (downlink control information, DCI), and in an uplink transmission scenario, the control information in this application is uplink control information (uplink control information, UCI). For ease of description, the following mainly uses the downlink transmission scenario as an example for description. It should be noted that the DCI is also referred to as physical layer signaling, and DCI with different content is scrambled by using different radio network temporary identifiers (radio network temporary identifiers, RNTIs) for cyclic redundancy check (cyclic redundancy check, CRC).

For example, the first configuration information includes a first control resource set (control resource set, CORESET) and a first search space (search space), the second configuration information includes a second CORESET and a second search space, the first search space is associated with a first RNTI, and the second search space is associated with a second RNTI. It may be understood that the first CORESET and the second CORESET may be the same or different, the first search space and the second search space may be the same or different, and the first RNTI and the second RNTI may be the same or different. It should be noted that, that the first CORESET and the second CORESET are different may be understood as that the first device and the second device each have a dedicated CORESET, that the first search space and the second search space are different may be understood as that the first device and the second device each have a dedicated search space, that the first RNTI and the second RNTI are different may be understood as that the first device and the second device each have a dedicated RNTI. That the first CORESET and the second CORESET are the same may be understood as that the first device and the second device share the CORESET, that the first search space and the second search space are the same may be understood as that the first device and the second device share the search space, and that the first RNTI and the second RNTI are the same may be understood as that the RNTIs of the first device and the second device are a group-RNTI (group-C-RNTI, CC-RNTI).

For example, the first CORESET and the second CORESET are the same, the first search space and the second search space are the same, the first RNTI and the second RNTI are the same, the first RNTI and the second RNTI are a first group-RNTI (group-C-RNTI, CC-RNTI), and the first group-RNTI is used to receive the first control information and the second control information.

Optionally, the BWP configuration information may further include seventh indication information and eighth indication information. The seventh indication information indicates a modulation scheme used by a TB, and the eighth indication information indicates a modulation rule of the TB. For example, the first BWP configuration information may further include seventh indication information 1 and eighth indication information 1. The seventh indication information 1 indicates a modulation scheme used by a first TB, and the eighth indication information 1 indicates a modulation rule of the first TB. For another example, the second BWP configuration information may further include seventh indication information 2 and eighth indication information 2. The seventh indication information 2 indicates a modulation scheme used by a second TB, and the eighth indication information 2 indicates a modulation rule of the second TB. For example, a length of the seventh indication information may be 1 bit. For example, the third device uses the 1 bit to indicate whether the third device uses multiplexed modulation. For example, multiplexed-modulated repetition (multiplexed-modulated repetition, MMR) _enable=0 indicates common modulation or non-multiplexed modulation, and MMR_enable=1 indicates the multiplexed modulation. For another example, a length of the seventh indication information may be 2 bits. For example, the third device uses the 2 bits to indicate specific multiplexed modulation used by the third device. When a value is 10, it indicates quadrature phase shift keying (quadrature phase shift keying, QPSK); when a value is 01, it indicates quadrature amplitude modulation (quadrature amplitude modulation, QAM); or when a value is 11, it indicates multiplexed modulation. A value 00 is used as a reserved value.

S702: The third device sends at least two pieces of control information. Correspondingly, the first device receives the at least two pieces of control information from the third device, and the second device receives the at least two pieces of control information from the third device.

In some feasible implementations, the at least two pieces of control information sent by the third device include first control information and second control information. The first control information indicates receiving of a first TB, and the second control information indicates receiving of a second TB. That is, each piece of control information indicates receiving of one TB. Each piece of control information may indicate, by carrying indication information, a TB corresponding to the control information. For example, the first control information includes fifth indication information, the fifth indication information indicates that the first TB corresponds to the first device, the second control information includes sixth indication information, and the sixth indication information indicates that the second TB corresponds to the second device. That is, to identify the TBs of the first device and the second device, indication information (for example, the fifth indication information and the sixth indication information) may be carried in the control information. For example, a length of the indication information may be 1 bit. For example, 0 indicates the first device, and 1 indicates the second device. For another example, 0 indicates the second device, and 1 indicates the first device. This is not limited herein. It may be understood that a quantity of bits included in the control information is related to a quantity of paired users. For example, four users correspond to two bits. Therefore, after successfully decoding a physical downlink control channel (physical downlink control channel, PDCCH), a device participating in pairing may decode a TB of the device based on an indication in control information, and decode, within idle time, a TB of another user participating in pairing.

Optionally, the control information may further include seventh indication information and eighth indication information. The seventh indication information indicates a modulation scheme used by a TB, and the eighth indication information indicates a modulation rule of the TB. For example, the first control information may further include seventh indication information 1 and eighth indication information 1. The seventh indication information 1 indicates a modulation scheme used by the first TB, and the eighth indication information 1 indicates a modulation rule of the first TB. For another example, the second control information may further include seventh indication information 2 and eighth indication information 2. The seventh indication information 2 indicates a modulation scheme used by the second TB, and the eighth indication information 2 indicates a modulation rule of the second TB. For example, a length of the seventh indication information may be 1 bit. For example, the third device uses the 1 bit to indicate whether multiplexed modulation is used by using MMR_enable, where 0 indicates common modulation or non-multiplexed modulation, and 1 indicates the multiplexed modulation. For another example, a length of the seventh indication information may be 2 bits. For example, the third device uses the 2 bits to indicate specific multiplexed modulation used by using MMR_enable. 10 indicates quadrature phase shift keying (quadrature phase shift keying, QPSK), 01 indicates quadrature amplitude modulation (quadrature amplitude modulation, QAM), or 11 indicates multiplexed modulation. 00 is used as a reserved value.

It should be noted that, for the first device, the first device may specifically receive the at least two pieces of control information based on the at least two pieces of BWP configuration information. For example, the first device may receive the first control information based on the first BWP configuration information, and receive the second control information based on the second BWP configuration information. Similarly, for the second device: The second device may specifically receive the at least two pieces of control information based on the at least two pieces of BWP configuration information. For example, the second device may receive the first control information based on the first BWP configuration information, and receive the second control information based on the second BWP configuration information.

S703: The third device sends at least two TBs. Correspondingly, the first device receives the at least two TBs from the third device, and the second device receives the at least two TBs from the third device.

In some feasible implementations, the at least two TBs sent by the third device may include a first TB and a second TB. The first TB is a TB corresponding to the first device, or it is understood that the first TB is a TB that the first device expects to receive; and the second TB is a TB corresponding to the second device, or it is understood that the second TB is a TB that the second device expects to receive.

For the first device, the first device may receive the at least two TBs from the third device based on the at least two pieces of control information. For the second device, the second device may receive the at least two TBs from the third device based on the at least two pieces of control information. One piece of control information indicates receiving of one TB. For example, the first device may receive the first TB based on the first control information, and receive the second TB based on the second control information, and the second device may receive the first TB based on the first control information, and receive the second TB based on the second control information. This is not limited herein. For ease of description, the following mainly uses the first TB and the second TB as an example for description.

The first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme.

It may be understood that the first modulation scheme may be quadrature phase shift keying (quadrature phase shift keying, QPSK), 16 quadrature amplitude modulation (quadrature amplitude modulation, QAM), 64 QAM, or the like. This is not limited herein. The first modulation scheme may alternatively be QPSK, 16 QAM, 64 QAM, or the like. This is not limited herein. The first modulation scheme and the second modulation scheme may be the same, or the first modulation scheme and the second modulation scheme may be different. This is specifically determined based on an actual scenario, and is not limited herein. Optionally, the first TB and the second TB may use different bit rates, or may use a same bit rate. This is not limited herein. Optionally, the first TB and the second TB may use different modulation orders, or may use a same modulation order. This is not limited herein. A constellation diagram mapping manner of the first TB and the second TB may be Gray mapping, non-Gray mapping, or the like. This is specifically determined based on an actual application scenario, and is not limited herein.

It should be noted that, for the first device, the first device may specifically receive the first TB based on the first control information, and receive the second TB based on the second control information. Similarly, for the second device, the second device may specifically receive the first TB based on the first control information, and receive the second TB based on the second control information.

S704: The third device sends a third TB if a preset condition is met. Correspondingly, the first device receives the third TB from the third device, and the second device receives the third TB from the third device.

The third TB includes at least one third modulation symbol, and the third modulation symbol is obtained by modulating a third bit group based on a third modulation scheme. Herein, the third bit group includes at least one bit in the first bit group and at least one bit in the second bit group. The third modulation scheme may be understood as multiplexed modulation. It may be understood that constellation points in a multiplexed modulation constellation diagram corresponding to the multiplexed modulation may be formed by uniformly or non-uniformly mixing bits from TB packets (for example, the first TB and the second TB) of at least two devices (for example, the first device and the second device); or may be formed by uniformly or non-uniformly mixing bits from a redundancy version (redundancy version, RV) version (for example, RV=0, 1, 2, 3, or the like) of TB packets (for example, the first TB and the second TB) of at least two devices (for example, the first device and the second device). A rule of mixing the bits may be predefined, may be indicated by using physical layer signaling, may be configured by using higher layer signaling, or may be a combination of the foregoing indication methods.

For example, a rule of mixing the bits may be as follows: It is assumed that at least one third modulation symbol may be obtained by modulating $2n$ bits, that is, the third bit group includes $2n$ bits. The $2n$ bits are respectively $b_0$, $b_1$, $b_2$, ..., and $b_{2n-1}$ ($n \geq 1$). $m1$ bits are from at least one first bit group of the first TB, and $m2$ bits are from at least one second bit group of the second TB, where $m1+m2=2n$ ($m1 \geq 1$, and $m2 \geq 1$), and $m1$ and $m2$ may be the same or different.

For example, when $n=2$, $m1=2$, and $m2=2$, the $m1$ bits may be distributed as $b_0$ and $b_1$, and the $m2$ bits may be distributed as $b_2$ and $b_3$. Alternatively, the $m1$ bits may be distributed as $b_0$ and $b_3$, and the $m2$ bits may be distributed as $b_1$ and $b_2$.

For another example, when $n=2$, $m1=1$, and $m2=3$, the $m1$ bits may be distributed as $b_0$, and the $m2$ bits may be distributed as $b_1$, $b_2$, and $b_3$. Alternatively, the $m1$ bits may be distributed as $b_2$, and the $m2$ bits may be distributed as $b_0$, $b_1$, and $b_2$.

In this example, if a quantity of bits included in the at least one first bit group of the first TB is greater than $m1$, and/or a quantity of bits included in the at least one second bit group of the second TB is greater than $m2$, the third device may also modulate remaining bits by using the third modulation scheme, to obtain another third TB.

Optionally, when lengths of the first bit group of the first TB and the second bit group of the second TB are inconsistent, zero padding, 1 padding, or known bit padding may be selected, so that the lengths of the bit groups of the two TB packets are consistent.

It should be noted that, in this embodiment of this application, the sending the third TB when the preset condition is met may include: sending the third TB when one or more of the following conditions are met:

①sending the third TB if it is determined that the first device fails to decode the first TB and successfully decodes the second TB, and it is determined that the second device successfully decodes the first TB and fails to decode the second TB;

②sending the third TB if it is determined that the first device successfully decodes the first TB, and it is determined that the second device successfully decodes the first TB and fails to decode the second TB;

③sending the third TB if it is determined that the first device fails to decode the first TB and successfully decodes the second TB, and it is determined that the second device successfully decodes the second TB; or

④sending the third TB if a quantity of times of sending the first TB and the second TB is equal to a preset quantity of times. A specific value of the preset quantity of times may be predefined in a protocol, may be indicated by higher layer signaling, or may be indicated by physical layer signaling. This is not limited herein.

For the condition ① to the condition ③, in an implementation, the third device may determine, based on feedback information sent by the first device and the second device, that the first device and the second device successfully decode or fail to decode the first TB and the second TB. Specifically, the third device may determine, based on first feedback information sent by the first device, that the first device successfully decodes or fails to decode the first TB, and determine, based on second feedback information sent by the first device, that the first device successfully decodes or fails to decode the second TB. The first feedback information includes acknowledgement information for the first TB or negative acknowledgement information for the first TB, and the second feedback information includes acknowledgement information for the second TB or negative acknowledgement information for the second TB. Correspondingly, the third device may determine, based on third feedback information sent by the second device, that the second device successfully decodes or fails to decode the first TB, and determine, based on fourth feedback information sent by the second device, that the second device successfully decodes or fails to decode the second TB. The third feedback information includes acknowledgement information for the first TB or negative acknowledgement information for the first TB, and the fourth feedback information includes acknowledgement information for the second TB or negative acknowledgement information for the second TB. It should be noted that in this embodiment of this application, the acknowledgement information may be understood as acknowledgement (acknowledgement, ACK) feedback information, and the negative acknowledgement information may be understood as negative acknowledgement (negative acknowledgement, NACK) feedback information. That is, in this implementation, a user has an ACK/NACK feedback when decoding a TB packet of the user, and also has an ACK/NACK feedback when decoding a TB packet of a paired user.

Optionally, for the condition ① to the condition ③, in another implementation, to save feedback resources, a user may have an ACK/NACK feedback when decoding a TB packet of the user, and has only an ACK feedback when decoding a TB packet of a paired user. That is, when the first device successfully decodes the first TB, the first device may feed back ACK information for the first TB, and when the first device fails to decode the first TB, the first device may feed back NACK information for the first TB; and when the first device successfully decodes the second TB, the first device may feed back ACK information for the second TB, and when the first device fails to decode the first TB, the first device does not feed back any information. Correspondingly, when the second device successfully decodes the first TB, the second device may feed back ACK information for the first TB, and when the second device fails to decode the first TB, the second device does not feed back any information; and when the second device successfully decodes the second TB, the second device may feed back ACK information for the second TB, and when the second device fails to decode the first TB, the second device may feed back NACK information for the second TB. Therefore, the third device may determine, based on the received ACK information or NACK information for the first TB from the first device, that the first device successfully decodes or fails to decode the first TB, and determine, based on the received ACK information for the second TB from the first device, that the first device successfully decodes the second TB. The third device determines, based on the received ACK information for the first TB from the second device, that the second device successfully decodes the first TB, and determines, based on the received ACK information or NACK information for the second TB from the second device, that the second device successfully decodes or fails to decode the second TB. It should be noted that, in this implementation, when the third device does not receive the feedback for the second TB from the first device, it may be considered by default that the first device fails to decode the second TB; and when the third device does not receive the feedback for the first TB from the second device, it may be considered by default that the second device fails to decode the first TB.

Optionally, for the condition ① to the condition ③, in another implementation, to further save feedback resources, a user may have only an ACK feedback but no NACK feedback when decoding TB packets of the user and a paired user. That is, when the first device successfully decodes the first TB, the first device may feed back ACK information for the first TB, and when the first device fails to decode the first TB, the first device does not feed back any information; and when the first device successfully decodes the second TB, the first device may feed back ACK information for the second TB, and when the first device fails to decode the first TB, the first device does not feed back any information. Correspondingly, when the second device successfully decodes the first TB, the second device may feed back ACK information for the first TB, and when the second device fails to decode the first TB, the second device does not feed back any information; and when the second device successfully decodes the second TB, the second device may feed back ACK information for the second TB, and when the second device fails to decode the first TB, the second device does not feed back any information. Therefore, the third device may determine, based on the received ACK information for the first TB from the first device, that the first device successfully decodes the first TB, and determine, based on the received ACK information for the second TB from the second device, that the first device successfully decodes the second TB. The third device determines, based on the received ACK information for the first TB from the second device, that the second device successfully decodes the first TB, and determines, based on the received ACK information for the second TB from the second device, that the second device successfully decodes the second TB. It should be noted that, in this implementation, when the third device does not receive the feedback for the first TB or the second TB from the first device, it may be considered by default that the first device fails to decode the first TB or the second TB, and when the third device does not receive the feedback for the first TB or the second TB from the second device, it may be considered by default that the second device fails to decode the first TB or the second TB.

For the condition ④, a user may not have any feedback when decoding TB packets of the user and a paired user, that is, there is no ACK/NACK feedback. Therefore, the third device may determine, based on the preset quantity of times and the quantity of times of sending the first TB and the second TB, whether to send the third TB.

It should be noted that, when the user has the ACK/NACK feedback when decoding the TB packet of the user, and also has the ACK/NACK feedback when decoding the TB packet of the paired user, that is, when the first device sends the first feedback information and the second feedback information, and the second device sends the third feedback information and the fourth feedback information, a transmission resource of the first feedback information may be a first transmission resource, a transmission resource of the second feedback information may be a second transmission resource, a transmission resource of the third feedback information may be a third transmission resource, and a transmission resource of the fourth feedback information may be a fourth transmission resource.

In an implementation, the first transmission resource and the second transmission resource may be different, and the third transmission resource and the fourth transmission resource may be different. Therefore, the third device may distinguish between the feedback for different TBs from the first device based on the first transmission resource and the second transmission resource, and distinguish between the feedback for the different TBs from the second device based on the third transmission resource and the fourth transmission resource. Specifically, the first transmission resource corresponds to the first TB, the second transmission resource corresponds to the second TB, the third transmission resource corresponds to the first TB, and the fourth transmission resource corresponds to the second TB. That is, the first device may distinguish between the feedback for the different TBs from the first device by using different physical uplink control channel (physical uplink control channel, PUCCH)/physical uplink shared channel (physical uplink shared channel, PUSCH) resources, and correspondingly, the second device may also distinguish between the feedback for the different TBs from the second device by using different PUCCH/PUSCH resources.

In another implementation, the first transmission resource and the second transmission resource may be the same, and the third transmission resource and the fourth transmission resource may be the same. In this implementation, to distinguish between the feedback for different TBs from the first device and distinguish between the feedback for the different TBs from the second device, indication information may be added to the feedback information. For example, the first feedback information includes first indication information, and the first indication information indicates that the first feedback information is feedback for the first TB. The second feedback information includes second indication information, and the second indication information indicates that the second feedback information is feedback for the second TB. The third feedback information includes third indication information, and the third indication information indicates that the third feedback information is feedback for the first TB. The fourth feedback information includes fourth indication information, and the fourth indication information indicates that the fourth feedback information is feedback for the second TB. For example, lengths of the indication information (for example, the first indication information, the second indication information, the third indication information, and the fourth indication information) may be 1 bit. For example, 0 indicates the first device, and 1 indicates the second device. For another example, 0 indicates the second device, and 1 indicates the first device. It should be noted that a quantity of bits in the feedback information is related to a quantity of paired users. For example, four users correspond to two bits. This is specifically determined based on an actual scenario, and is not limited herein. Optionally, when the first transmission resource and the second transmission resource may be the same, and the third transmission resource and the fourth transmission resource may be the same, to distinguish between the feedback for the different TBs from the first device and distinguish between the feedback for the different TBs from the second device, codebooks may be further fed back in a specific sequence. For example, data of the user is first fed back, and data of another user is then fed back; or data of another user is first fed back, and data of the user is then fed back. Herein, feedback sequence may be predefined in a protocol or preconfigured. This is not limited herein.

Optionally, to distinguish between the feedback from different devices, the transmission resource used by the first device for feedback may be different from the transmission resource used by the second device for feedback. Therefore, the feedback from the different devices may be distinguished based on different PUCCH/PUSCH resources. Optionally, the transmission resource used by the first device for feedback may alternatively be the same as the transmission resource used by the second device for feedback. Therefore, the indication information may be added to the feedback information to distinguish a specific device from which the corresponding feedback information is.

It should be noted that, before step S704, the third device may further send fourth BWP configuration information. Correspondingly, the first device and/or the second device receive/receives the fourth BWP configuration information from the third device. The fourth BWP configuration information indicates receiving of fourth control information. Further, the third device sends the fourth control information. Correspondingly, the first device and/or the second device receive/receives the fourth control information from the third device, where the fourth control information indicates receiving of the third TB. Therefore, the first device and/or the second device may receive the third TB from the third device based on the fourth control information. Optionally, the fourth BWP configuration information and/or the fourth control information may include seventh indication information 3 and eighth indication information 3, where the seventh indication information 3 indicates a modulation scheme used by the third TB, and the eighth indication information 3 indicates a modulation rule of the third TB.

It should be noted that, after receiving and decoding the third TB, the first device may send an ACK/NACK to the third device based on a decoding result, or send only the ACK to the third device, or may not send any feedback information. Similarly, after receiving and decoding the third TB, the second device may also send an ACK/NACK to the third device based on a decoding result, or send only the ACK to the third device, or may not send any feedback information.

It should be noted that, for the first device, a TB (for example, the second TB) of another user (for example, the second device) may help the first device obtain the first TB through demodulation from the third TB, thereby improving demodulation reliability and link reliability. For the second device, a TB (for example, the first TB) of another user (for example, the first device) may help the first device obtain the second TB through demodulation from the third TB, thereby improving demodulation reliability and link reliability.

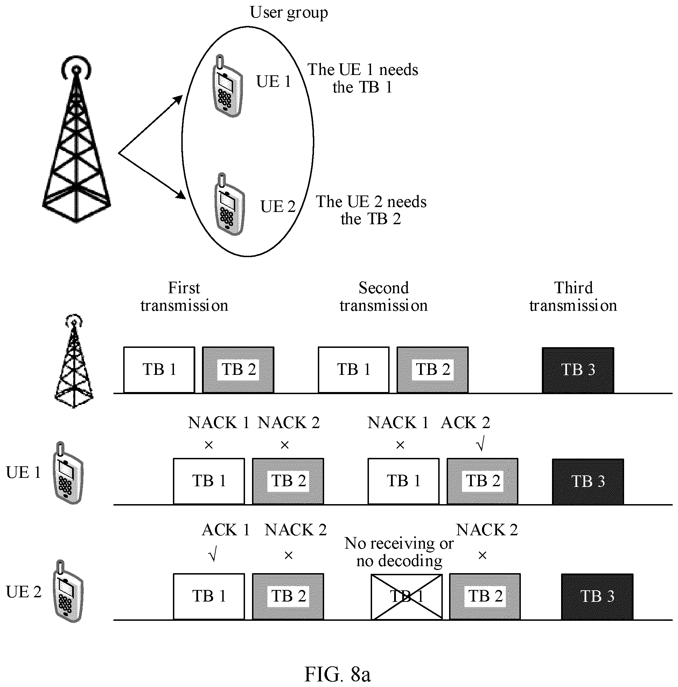

For example, FIG. 8a is a diagram of a scenario of a multiplexed modulation scheme with an ACK/NACK feedback according to an embodiment of this application. As shown in FIG. 8a, it is assumed that a user group includes UE 1 and UE 2, where the UE 1 needs a TB 1, and the UE 2 needs a TB 2. An example in which a constellation diagram with Gray modulation is a 16-QMA constellation diagram is used.

First transmission (that is, initial transmission)

Transmit end:

The transmit end (a downlink is used as an example, and the transmit end is a base station, or may be a terminal device) maps the transport blocks TB 1 and TB 2 to the 16-QMA constellation diagram with the Gray mapping, and sends modulation symbols to a receive end (the receive end is UE 1 and UE 2, the UE 1 needs the TB 1, and the UE 2 needs the TB 2).

The transport blocks TB 1 and TB 2 are transmission bit strings formed by performing CRC check, channel encoding, code block multiplexing, and modulation on transmission information bits. A length of the transport block TB 1 is equal to that of the transport block TB 2, and the TB 1 and the TB 2 may be sent on a same resource, or may be sent on different resources.

Receive end:

UE 1: The UE 1 first receives and decodes the TB 1, incorrectly decodes the TB 1, then receives the TB 2 in idle time, and incorrectly decodes the TB 2. A NACK 1 and a NACK 2 are fed back. The NACK 1 indicates that the TB 1 is incorrectly decoded, and the NACK 2 indicates that the TB 2 is incorrectly decoded.

UE 2: The UE 2 first receives and decodes the TB 2, incorrectly decodes the TB 2, then receives the TB 1 in idle time, and correctly decodes the TB 1. A NACK 2 and an ACK 1 are fed back. The ACK 1 indicates that the TB 1 is correctly decoded, and the NACK 2 indicates that the TB 2 is incorrectly decoded.

Second transmission (that is, first retransmission)

Transmit end:

The transmit end selects, based on received feedback information, a transmission scheme of the 16-QMA constellation diagram based on Gray mapping, and transmits MMR_enable=0.

The transmit end transmits the transport blocks TB 1 and TB 2 to the receive end based on the 16-QMA constellation diagram.

It should be noted that the second transmission is the same as the first transmission.

Receive end:

UE 1: The UE 1 first receives and decodes the TB 1, incorrectly decodes the TB 1, then receives the TB 2 in idle time, and correctly decodes the TB 2. A NACK 1 and an ACK 2 are fed back. The NACK 1 indicates that the TB 1 is incorrectly decoded, and the ACK 2 indicates that the TB 2 is correctly decoded.

UE 2: The UE 2 first receives and decodes the TB 2, incorrectly decodes the TB 2, does not receive the TB 1, and feeds back a NACK 2. The NACK 2 indicates that the TB 2 is incorrectly decoded.

Third transmission (that is, second retransmission)

Transmit end:

The transmit end selects, based on received feedback information, a transmission scheme based on multiplexed modulation, that is, uses a multiplexed modulation constellation diagram, for example, a 16-QMA constellation diagram with multiplexed mapping, and transmits MMR_enable=1. A half of bits are selected from each of the TB 1 and the TB 2 according to a predefined rule. The predefined rule may be: a first half of bits from the TB 1 and a first half of bits from the TB 2. The predefined rule may alternatively be indicated by using physical layer signaling or higher layer signaling. Then, the transmit end maps the half of bits from the TB 1 and the half of bits from the TB 2 to 16 QAM with the multiplexed mapping, and a mapping rule is predefined as follows: Two bits from the TB 1 may be mapped to first two bits at a constellation point, and two bits from the TB 2 may be mapped to last two bits at the constellation point; two bits from the TB 1 are mapped to a $1^{st}$ bit and a $3^{rd}$ bit at a constellation point, and two bits from the TB 2 are mapped to a $2^{nd}$ bit and a $4^{th}$ bit at the constellation point; or two bits from the TB 1 are mapped to a $1^{st}$ bit and a $4^{th}$ bit at a constellation point, and two bits from the TB 2 are mapped to a $2^{nd}$ bit and a $3^{rd}$ bit at the constellation point. (The TB 1 and the TB 2 may be changed in the foregoing predefined rule. The following procedure is described by mapping the two bits from the TB 1 to the first two bits at the constellation point and mapping the two bits from the TB 2 to the last two bits at the constellation point.) After constellation mapping is completed, the base station sends a symbol to the UE 1 and the UE 2.

The base station extracts remaining bits from the TB 1 and the TB 2, maps the remaining bits from the TB 1 and the TB 2 to the 16 QAM with the multiplexed mapping according to the same mapping rule, and sends modulation symbols to the UE 1 and the UE 2. That is, the transmit end sends a TB 3.

When the multiplexed modulation is used, the foregoing transmitted data blocks are sent on a same resource.

Receive end:

UE 1: The UE 1 demodulates the TB 1 from the TB 3 by using known data of the TB 2, and decodes the TB 1.

UE 2: The UE 2 demodulates the TB 2 from the TB 3 by using known data of the TB 1, and decodes the TB 2.

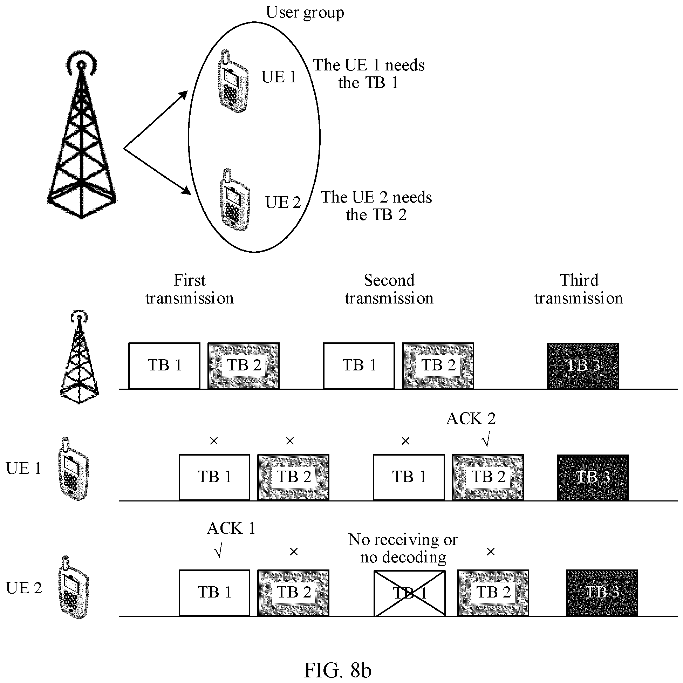

For another example, FIG. 8b is a diagram of a scenario of a multiplexed modulation scheme with only an ACK feedback according to an embodiment of this application. As shown in FIG. 8b, it is assumed that a user group includes UE 1 and UE 2, where the UE 1 needs a TB 1, and the UE 2 needs a TB 2. An example in which a constellation diagram with common modulation is a 16-QMA constellation diagram with Gray mapping is used.

First transmission (that is, initial transmission)

Transmit end:

The transmit end (a downlink is used as an example, and the transmit end is a base station, or may be a terminal device) maps the transport blocks TB 1 and TB 2 to the 16-QMA constellation diagram with the Gray mapping, and sends modulation symbols to a receive end (the receive end is UE 1 and UE 2, the UE 1 needs the TB 1, and the UE 2 needs the TB 2).

The transport blocks TB 1 and TB 2 are transmission bit strings formed by performing CRC check, channel encoding, code block multiplexing, and modulation on transmission information bits. A length of the transport block TB 1 is equal to that of the transport block TB 2, and the TB 1 and the TB 2 may be sent on a same resource, or may be sent on different resources.

Receive end:

UE 1: The UE 1 first receives and decodes the TB 1, incorrectly decodes the TB 1, then receives the TB 2 in idle time, incorrectly decodes the TB 2, and does not perform feedback.

UE 2: The UE 2 first receives and decodes the TB 2, incorrectly decodes the TB 2, then receives the TB 1 in idle time, correctly decodes the TB 1, and feeds back an ACK 1. The ACK 1 indicates that the TB 1 is correctly decoded.

Second transmission (that is, first retransmission)

Transmit end:

The transmit end selects, based on received feedback information, a transmission scheme of the 16-QMA constellation diagram based on Gray mapping, and transmits MMR_enable=0.

The transmit end transmits the transport blocks TB 1 and TB 2 to the receive end based on the 16-QMA constellation diagram.

It should be noted that the second transmission is the same as the first transmission.

Receive end:

UE 1: The UE 1 first receives and decodes the TB 1, incorrectly decodes the TB 1, then receives the TB 2 in idle time, and correctly decodes the TB 2. An ACK 2 is fed back.

The ACK 2 indicates that the TB 2 is correctly decoded.

UE 2: The UE 2 first receives and decodes the TB 2, incorrectly decodes the TB 2, does not receive the TB 1, and does not perform feedback.

Third transmission (that is, second retransmission)

Transmit end:

The transmit end selects, based on received feedback information, a transmission scheme based on multiplexed modulation, that is, uses a multiplexed modulation constellation diagram, for example, a 16-QMA constellation diagram with multiplexed mapping, and transmits MMR_enable=1.

A half of bits are selected from each of the TB 1 and the TB 2 according to a predefined rule. The predefined rule may be: a first half of bits from the TB 1 and a first half of bits from the TB 2. The predefined rule may alternatively be indicated by using physical layer signaling or higher layer signaling. Then, the base station maps the half of bits from the TB 1 and the half of bits from the TB 2 to 16 QAM with the multiplexed mapping, and a mapping rule is predefined as follows: Two bits from the TB 1 may be mapped to first two bits at a constellation point, and two bits from the TB 2 may be mapped to last two bits at the constellation point; two bits from the TB 1 are mapped to a 1st bit and a 3rd bit at a constellation point, and two bits from the TB 2 are mapped to a 2nd bit and a 4th bit at the constellation point; or two bits from the TB 1 are mapped to a 1st bit and a 4th bit at a constellation point, and two bits from the TB 2 are mapped to a 2nd bit and a 3rd bit at the constellation point. (The TB 1 and the TB 2 may be changed in the foregoing predefined rule. The following procedure is described by mapping the two bits from the TB 1 to the first two bits at the constellation point and mapping the two bits from the TB 2 to the last two bits at the constellation point.) After constellation mapping is completed, the base station sends a symbol to the UE 1 and the UE 2.

The base station extracts remaining bits from the TB 1 and the TB 2, maps the remaining bits from the TB 1 and the TB 2 to the 16 QAM with the multiplexed mapping according to the same mapping rule, and sends modulation symbols to the UE 1 and the UE 2. That is, the transmit end sends a TB 3.

When the multiplexed modulation is used, the foregoing transmitted data blocks are sent on a same resource.

Receive end:

UE 1: The UE 1 demodulates the TB 1 from the TB 3 by using known data of the TB 2, and decodes the TB 1.

UE 2: The UE 2 demodulates the TB 2 from the TB 3 by using known data of the TB 1, and decodes the TB 2.

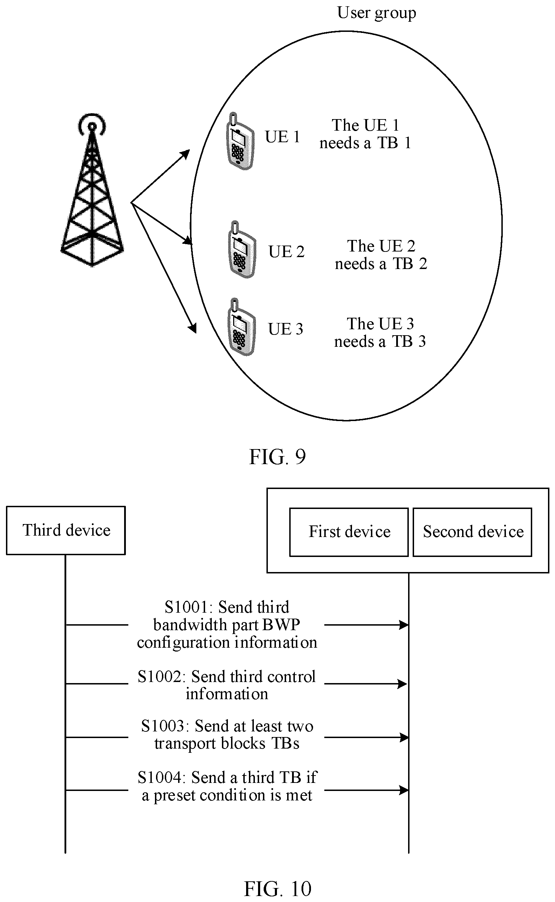

For another example, FIG. 9 is a diagram of a scenario of a random user pairing-based multiplexed modulation scheme according to an embodiment of this application. As shown in FIG. 9, it is assumed that a user group includes UE 1, UE 2, and UE 3, where the UE 1 needs a TB 1, the UE 2 needs a TB 2, and the UE 3 needs a TB 3. An example in which a constellation diagram with common modulation is a 16-QMA constellation diagram with Gray mapping is used.

Transmit end

Initial transmission: A gNB transmits the TB 1, the TB 2, and the TB 3 to the UE 1, the UE 2, and the UE3, where the TB 1, the TB 2, and the TB 3 are modulated by using a 16-QMA constellation diagram with Gray mapping.

Retransmission:

One of two options is determined based on feedback status.

Option 1: The gNB transmits, to the UE 1, the UE 2, and the UE 3, the TB 1, the TB 2, and the TB 3 that are modulated based on the 16-QMA constellation diagram with the Gray mapping.

Option 2: The gNB transmits a mixed TB a and a mixed TB b that are based on multiplexed modulation.

Specific step details are the same as those in multiplexed modulation processing manners in FIG. 8a and FIG. 8b.

The TB a or the TB b belongs to one of the TB 1, the TB 2, and the TB 3, and the TB a and the TB b are different.

At a receive end, the UE 1 is used as an example. The UE 2 and the UE3 have similar cases.

The UE 1 receives the TB 1, and decodes data of another user within idle time, where the data may be the TB 2 or the TB 3.

(1) If the TB 1 is correctly decoded, and an ACK 1 is fed back, the UE 1 no longer receives data.
(2) If the TB 1 is incorrectly decoded, a NACK 1 is fed back, and a TB X (which may be the TB 2 or the TB 3) is received and incorrectly decoded within the idle time, a base station selects Option 1 for sending.
(3) If the TB 1 is incorrectly decoded, a NACK 1 is fed back, and a TB X (which may be the TB 2 or the TB 3) is received and correctly decoded within the idle time, a base station selects Option 2 for sending. The mixed TB a and the mixed TB b in Configuration 2 are a mixture of the TB 1 and a TB X.

In this embodiment of this application, when a preset condition is met, a third TB sent by the transmit end includes bit data of TBs of at least two devices (for example, a first device and a second device). Compared with a TB-based multiplexed-modulated repetition transmission scheme, this shortens a transmission latency. In addition, after receiving the third TB, the receive end (for example, the first device) demodulates the third TB based on a known second TB (that is, correctly decoded data) to obtain a first TB. This can improve demodulation reliability, and reduce a signal-to-noise ratio (signal-to-noise ratio, SNR) requirement on correct decoding. That is, the method further improves communication reliability while ensuring a latency.

FIG. 10 is another schematic flowchart of a communication method according to an embodiment of this application. The method may be performed by a first device, a second device, and a third device, or may be performed by chips in the first device, the second device, and the third device. For ease of description, the following mainly uses the first device, the second device, and the third device as execution bodies for description. The method shown in FIG. 10 may include the following operations.

S1001: The third device sends third BWP configuration information. Correspondingly, the first device receives the third BWP configuration information from the third device, and the second device receives the third BWP configuration information from the third device.

The third BWP configuration information indicates receiving of third control information, the third configuration information includes a third CORESET and a third search space, and the third search space is associated with a second group-RNTI. The first device and the second device belong to a same device group. Usually, a plurality of devices with a same physical location or similar physical locations may be grouped into a same device group. That is, the device group to which the first device and the second device belong may further include the third device, a fourth device, and the like. This is not limited herein. For ease of description, the first device and the second device are mainly used as an example for description in this embodiment of this application.

It may be understood that, in a downlink transmission scenario, the control information in this application is DCI, and in an uplink transmission scenario, the control information in this application is UCI. For ease of description, the following mainly uses the downlink transmission scenario as an example for description.

Optionally, the BWP configuration information may further include seventh indication information and eighth indication information. The seventh indication information indicates a modulation scheme used by a TB, and the eighth indication information indicates a modulation rule of the TB. For example, the third BWP configuration information may further include seventh indication information 1, seventh indication information 2, eighth indication information 1, and eighth indication information 2. The seventh indication information 1 indicates a modulation scheme used by the first TB, the eighth indication information 1 indicates a modulation rule of the first TB, the seventh indication information 2 indicates a modulation scheme used by a second TB, and the eighth indication information 2 indicates a modulation rule of the second TB. For example, a length of the seventh indication information may be 1 bit. For example, the third device uses the 1 bit to indicate whether the third device uses multiplexed modulation. For example, MMR_enable=0 indicates common modulation or non-multiplexed modulation, and MMR_enable=1 indicates the multiplexed modulation.

S1002: The third device sends third control information. Correspondingly, the first device receives the third control information from the third device, and the second device receives the third control information from the third device.

The third control information includes a common information field, a first dedicated information field, and a second dedicated information field, the common information field and the first dedicated information field indicate receiving of the first TB, and the common information field and the second dedicated information field indicate receiving of the second TB. That is, one piece of control information indicates receiving of a plurality of TBs. It should be noted that the common information field is used to carry, in the third control information, common information indicating the receiving of the first TB and the receiving of the second TB, the first dedicated information field is used to carry, in the third control information, dedicated information indicating the receiving of the first TB, and the second dedicated information field is used to carry, in the third control information, dedicated information indicating the receiving of the second TB.

Optionally, the control information may further include seventh indication information and eighth indication information. The seventh indication information indicates a modulation scheme used by a TB, and the eighth indication information indicates a modulation rule of the TB. For example, the third control information may further include seventh indication information 1, seventh indication information 2, eighth indication information 1, and eighth indication information 2. The seventh indication information 1 indicates a modulation scheme used by the first TB, the eighth indication information 1 indicates a modulation rule of the first TB, the seventh indication information 2 indicates a modulation scheme used by a second TB, and the eighth indication information 2 indicates a modulation rule of the second TB.

It should be noted that, for the first device, the first device may specifically receive the third control information based on the third BWP configuration information. Similarly, for the second device, the second device may specifically receive the third control information based on the third BWP configuration information.

S1003: The third device sends at least two TBs. Correspondingly, the first device receives the at least two TBs from the third device, and the second device receives the at least two TBs from the third device.

In some feasible implementations, the at least two TBs sent by the third device may include a first TB and a second TB. The first TB is a TB corresponding to the first device, or it is understood that the first TB is a TB that the first device expects to receive; and the second TB is a TB corresponding to the second device, or it is understood that the second TB is a TB that the second device expects to receive.

It should be noted that the at least two TBs sent by the third device may be sent together, or may be separately sent. For example, the first TB and the second TB may be sent together, or the first TB and the second TB may be separately sent. When the first TB and the second TB are sent together, the third control information needs to indicate which bits in bits corresponding to the first TB and the second TB that are sent together belong to the first device and which bits belong to the second device.

For the first device, the first device may receive the at least two TBs from the third device based on the third control information. For the second device, the second device may receive the at least two TBs from the third device based on the third control information. The third control information indicates receiving of a plurality of TBs.

The first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme.

It may be understood that the first modulation scheme may be QPSK, 16 QAM, 64 QAM, or the like. This is not limited herein. The first modulation scheme may alternatively be QPSK, 16 QAM, 64 QAM, or the like. This is not limited herein. The first modulation scheme and the second modulation scheme may be the same, or the first modulation scheme and the second modulation scheme may be different. This is specifically determined based on an actual scenario, and is not limited herein. Optionally, the first TB and the second TB may use different bit rates, or may use a same bit rate. This is not limited herein. Optionally, the first TB and the second TB may use different modulation orders, or may use a same modulation order. This is not limited herein. A constellation diagram mapping manner of the first TB and the second TB may be Gray mapping, non-Gray mapping, or the like. This is specifically determined based on an actual application scenario, and is not limited herein.

It should be noted that, for the first device, the first device may specifically receive the first TB based on first control information, and receive the second TB based on second control information. Similarly, for the second device, the second device may specifically receive the first TB based on the first control information, and receive the second TB based on the second control information.

S 1004: The third device sends a third TB if a preset condition is met. Correspondingly, the first device receives the third TB from the third device, and the second device receives the third TB from the third device.

The third TB includes at least one third modulation symbol, and the third modulation symbol is obtained by modulating a third bit group based on a third modulation scheme. Herein, the third bit group includes at least one bit in the first bit group and at least one bit in the second bit group. The third modulation scheme may be understood as multiplexed modulation. It may be understood that constellation points in a multiplexed modulation constellation diagram corresponding to the multiplexed modulation may be formed by uniformly or non-uniformly mixing bits from TB packets (for example, the first TB and the second TB) of at least two devices (for example, the first device and the second device); or may be formed by uniformly or non-uniformly mixing bits from a RV version (for example, RV=0, 1, 2, 3, or the like) of TB packets (for example, the first TB and the second TB) of at least two devices (for example, the first device and the second device). A rule of mixing the bits may be predefined, may be indicated by using physical layer signaling, may be configured by using higher layer signaling, or may be a combination of the foregoing indication methods.

For example, it is assumed that at least one third modulation symbol is obtained by modulating 2n bits, that is, the third bit group includes 2n bits. The 2n bits are respectively $b_0$, $b_1$, $b_2$, ..., and $b_{2n-1}$ ($n \geq 1$). A rule of mixing the bits may be as follows: m1 bits are from at least one first bit group of the first TB, and m2 bits are from at least one second bit group of the second TB, where m1+m2=2n (m1$\geq$1, and m2$\geq$1), and m1 and m2 may be the same or different.

For example, when n=2, m1=2, and m2=2, the m1 bits may be distributed as $b_0$ and $b_1$, and the m2 bits may be distributed as $b_2$ and $b_3$. Alternatively, the m1 bits may be distributed as $b_0$ and $b_3$, and the m2 bits may be distributed as $b_1$ and $b_2$.

For another example, when n=2, m1=1, and m2=3, the m1 bits may be distributed as $b_0$, and the m2 bits may be distributed as $b_1$, $b_2$, and $b_3$. Alternatively, the m1 bits may be distributed as $b_2$, and the m2 bits may be distributed as $b_0$, $b_1$, and $b_2$.

In this example, if a quantity of bits included in the at least one first bit group of the first TB is greater than m1, and/or a quantity of bits included in the at least one second bit group of the second TB is greater than m2, the third device may also modulate remaining bits by using the third modulation scheme, to obtain another third TB.

Optionally, when lengths of the first bit group of the first TB and the second bit group of the second TB are inconsistent, zero padding, 1 padding, or known bit padding may be selected, so that the lengths of the bit groups of the two TB packets are consistent.

It should be noted that, in this embodiment of this application, the sending the third TB when the preset condition is met may include: sending the third TB when one or more of the following conditions are met:

①sending the third TB if it is determined that the first device fails to decode the first TB and successfully decodes the second TB, and it is determined that the second device successfully decodes the first TB and fails to decode the second TB;

②sending the third TB if it is determined that the first device successfully decodes the first TB, and it is determined that the second device successfully decodes the first TB and fails to decode the second TB;

③sending the third TB if it is determined that the first device fails to decode the first TB and successfully decodes the second TB, and it is determined that the second device successfully decodes the second TB;

or

④sending the third TB if a quantity of times of sending the first TB and the second TB is equal to a preset quantity of times. A specific value of the preset quantity of times may be predefined in a protocol, may be indicated by higher layer signaling, or may be indicated by physical layer signaling. This is not limited herein.

For the condition ① to the condition ③, in an implementation, the third device may determine, based on feedback information sent by the first device and the second device, that the first device and the second device successfully decode or fail to decode the first TB and the second TB. Specifically, the third device may determine, based on first feedback information sent by the first device, that the first device successfully decodes or fails to decode the first TB, and determine, based on second feedback information sent by the first device, that the first device successfully decodes or fails to decode the second TB. The first feedback information includes acknowledgement information for the first TB or negative acknowledgement information for the first TB, and the second feedback information includes acknowledgement information for the second TB or negative acknowledgement information for the second TB. Correspondingly, the third device may determine, based on third feedback information sent by the second device, that the second device successfully decodes or fails to decode the first TB, and determine, based on fourth feedback information sent by the second device, that the second device successfully decodes or fails to decode the second TB. The third feedback information includes acknowledgement information for the first TB or negative acknowledgement information for the first TB, and the fourth feedback information includes acknowledgement information for the second TB or negative acknowledgement information for the second TB. It should be noted that in this embodiment of this application, the acknowledgement information may be understood as ACK information, and the negative acknowledgement information may be understood as negative acknowledgement NACK information. That is, in this implementation, a user has an ACK/NACK feedback when decoding a TB packet of the user, and also has an ACK/NACK feedback when decoding a TB packet of a paired user.

Optionally, for the condition ① to the condition ③, in another implementation, to save feedback resources, a user may have an ACK/NACK feedback when decoding a TB packet of the user, and has only an ACK feedback when decoding a TB packet of a paired user. That is, when the first device successfully decodes the first TB, the first device may feed back ACK information for the first TB, and when the first device fails to decode the first TB, the first device may feed back NACK information for the first TB; and when the first device successfully decodes the second TB, the first device may feed back ACK information for the second TB, and when the first device fails to decode the first TB, the first device does not feed back any information. Correspondingly, when the second device successfully decodes the first TB, the second device may feed back ACK information for the first TB, and when the second device fails to decode the first TB, the second device does not feed back any information; and when the second device successfully decodes the second TB, the second device may feed back ACK information for the second TB, and when the second device fails to decode the first TB, the second device may feed back NACK information for the second TB. Therefore, the third device may determine, based on the received ACK information or NACK information for the first TB from the first device, that the first device successfully decodes or fails to decode the first TB, and determine, based on the received ACK information for the second TB from the first device, that the first device successfully decodes the second TB. The third device determines, based on the received ACK information for the first TB from the second device, that the second device successfully decodes the first TB, and determines, based on the received ACK information or NACK information for the second TB from the second device, that the second device successfully decodes or fails to decode the second TB. It should be noted that, in this implementation, when the third device does not receive the feedback for the second TB from the first device, it may be considered by default that the first device fails to decode the second TB; and when the third device does not receive the feedback for the first TB from the second device, it may be considered by default that the second device fails to decode the first TB.

Optionally, for the condition ① to the condition ③, in another implementation, to further save feedback resources, a user may have only an ACK feedback but no NACK feedback when decoding TB packets of the user and a paired user. That is, when the first device successfully decodes the first TB, the first device may feed back ACK information for the first TB, and when the first device fails to decode the first TB, the first device does not feed back any information; and when the first device successfully decodes the second TB, the first device may feed back ACK information for the second TB, and when the first device fails to decode the first TB, the first device does not feed back any information. Correspondingly, when the second device successfully decodes the first TB, the second device may feed back ACK information for the first TB, and when the second device fails to decode the first TB, the second device does not feed back any information; and when the second device successfully decodes the second TB, the second device may feed back ACK information for the second TB, and when the second device fails to decode the first TB, the second device does not feed back any information. Therefore, the third device may determine, based on the received ACK information for the first TB from the first device, that the first device successfully decodes the first TB, and determine, based on the received ACK information for the second TB from the second device, that the first device successfully decodes the second TB. The third device determines, based on the received ACK information for the first TB from the second device, that the second device successfully decodes the first TB, and determines, based on the received ACK information for the second TB from the second device, that the second device successfully decodes the second TB. It should be noted that, in this implementation, when the third device does not receive the feedback for the first TB or the second TB from the first device, it may be considered by default that the first device fails to decode the first TB or the second TB, and when the third device does not receive the feedback for the first TB or the second TB from the second device, it may be considered by default that the second device fails to decode the first TB or the second TB.

For the condition ④, a user may not have any feedback when decoding TB packets of the user and a paired user, that is, there is no ACK/NACK feedback. Therefore, the third device may determine, based on the preset quantity of times and the quantity of times of sending the first TB and the second TB, whether to send the third TB.

It should be noted that, when the user has the ACK/NACK feedback when decoding the TB packet of the user, and also has the ACK/NACK feedback when decoding the TB packet of the paired user, that is, when the first device sends the first feedback information and the second feedback information, and the second device sends the third feedback information and the fourth feedback information, a transmission resource of the first feedback information may be a first transmission resource, a transmission resource of the second feedback information may be a second transmission resource, a transmission resource of the third feedback information may be a third transmission resource, and a transmission resource of the fourth feedback information may be a fourth transmission resource.

In an implementation, the first transmission resource and the second transmission resource may be different, and the third transmission resource and the fourth transmission resource may be different. Therefore, the third device may distinguish between the feedback for different TBs from the first device based on the first transmission resource and the second transmission resource, and distinguish between the feedback for the different TBs from the second device based on the third transmission resource and the fourth transmission resource. Specifically, the first transmission resource corresponds to the first TB, the second transmission resource corresponds to the second TB, the third transmission resource corresponds to the first TB, and the fourth transmission resource corresponds to the second TB. That is, the first device may distinguish between the feedback for the different TBs from the first device by using different PUCCH/PUSCH resources, and correspondingly, the second device may also distinguish between the feedback for the different TBs from the second device by using different PUCCH/PUSCH resources.

In another implementation, the first transmission resource and the second transmission resource may be the same, and the third transmission resource and the fourth transmission resource may be the same. In this implementation, to distinguish between the feedback for different TBs from the first device and distinguish between the feedback for the different TBs from the second device, indication information may be added to the feedback information. For example, the first feedback information includes first indication information, and the first indication information indicates that the first feedback information is feedback for the first TB. The second feedback information includes second indication information, and the second indication information indicates that the second feedback information is feedback for the second TB. The third feedback information includes third indication information, and the third indication information indicates that the third feedback information is feedback for the first TB. The fourth feedback information includes fourth indication information, and the fourth indication information indicates that the fourth feedback information is feedback for the second TB. For example, lengths of the indication information (for example, the first indication information, the second indication information, the third indication information, and the fourth indication information) may be 1 bit. For example, 0 indicates the first device, and 1 indicates the second device. For another example, 0 indicates the second device, and 1 indicates the first device. It should be noted that a quantity of bits in the feedback information is related to a quantity of paired users. For example, four users correspond to two bits. This is specifically determined based on an actual scenario, and is not limited herein. Optionally, when the first transmission resource and the second transmission resource may be the same, and the third transmission resource and the fourth transmission resource may be the same, to distinguish between the feedback for the different TBs from the first device and distinguish between the feedback for different TBs from the second device, codebooks may be further fed back in a specific sequence. For example, data of the user is first fed back, and data of another user is then fed back; or data of another user is first fed back, and data of the user is then fed back. Herein, feedback sequence may be predefined in a protocol or preconfigured. This is not limited herein.

Optionally, to distinguish between the feedback from different devices, the transmission resource used by the first device for feedback may be different from the transmission resource used by the second device for feedback. Therefore, the feedback from the different devices may be distinguished based on different PUCCH/PUSCH resources. Optionally, the transmission resource used by the first device for feedback may alternatively be the same as the transmission resource used by the second device for feedback. Therefore, the indication information may be added to the feedback information to distinguish a specific device from which the corresponding feedback information is.

It should be noted that, before step S1004, the third device may further send fourth BWP configuration information. Correspondingly, the first device and/or the second device receive/receives the fourth BWP configuration information from the third device. The fourth BWP configuration information indicates receiving of fourth control information. Further, the third device sends the fourth control information. Correspondingly, the first device and/or the second device receive/receives the fourth control information from the third device, where the fourth control information indicates receiving of the third TB. Therefore, the first device and/or the second device may receive the third TB from the third device based on the fourth control information. Optionally, the fourth BWP configuration information and/or the fourth control information may include seventh indication information 3 and eighth indication information 3, where the seventh indication information 3 indicates a modulation scheme used by the third TB, and the eighth indication information 3 indicates a modulation rule of the third TB.

It should be noted that, after receiving and decoding the third TB, the first device may send an ACK/NACK to the third device based on a decoding result, or send only the ACK to the third device, or may not send any feedback information. Similarly, after receiving and decoding the third TB, the second device may also send an ACK/NACK to the third device based on a decoding result, or send only the ACK to the third device, or may not send any feedback information.

It should be noted that, for the first device, a TB (for example, the second TB) of another user (for example, the second device) may help the first device obtain the first TB through demodulation from the third TB, thereby improving demodulation reliability and link reliability. For the second device, a TB (for example, the first TB) of another user (for example, the first device) may help the first device obtain the second TB through demodulation from the third TB, thereby improving demodulation reliability and link reliability.

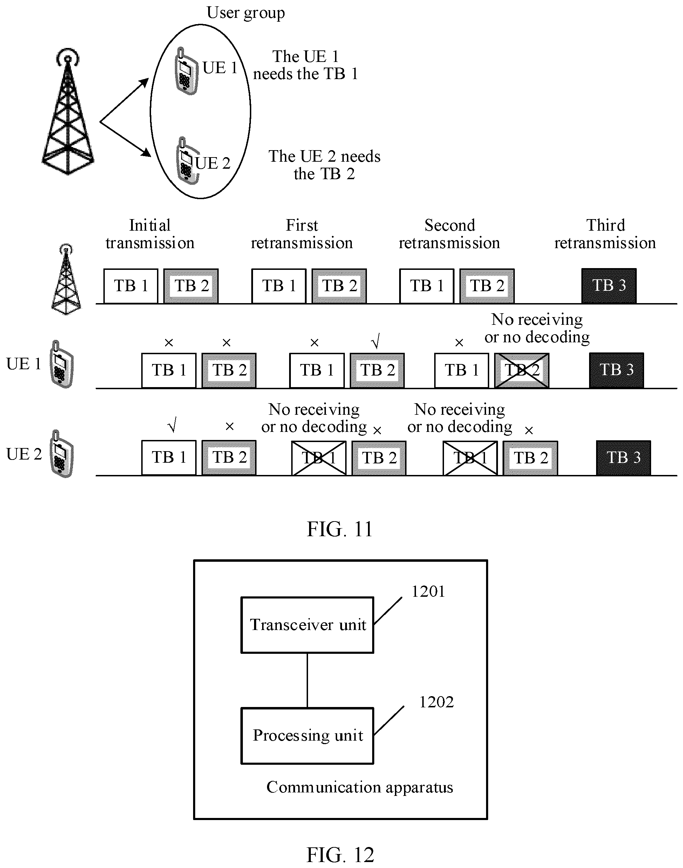

For example, FIG. 11 is a diagram of a scenario of a blind retransmission-based multiplexed modulation scheme according to an embodiment of this application. As shown in FIG. 11, it is assumed that a user group includes UE 1 and UE 2, where the UE 1 needs a TB 1, and the UE 2 needs a TB 2. An example in which a constellation diagram with normal modulation is a 16-QMA constellation diagram with Gray mapping is used. It is assumed that a preset quantity of times is equal to 3. That is, when a quantity of times of sending the TB 1 and the TB 2 based on the 16-QMA constellation diagram is equal to 3, the TB 1 and the TB 2 are sent based on multiplexed modulation for a fourth time, that is, a third TB (for example, the TB 3 in FIG. 11) is sent.

Transmit end

Initial transmission: A gNB transmits the TB 1 and the TB 2 to the UE 1 and the UE 2, where the TB 1 and the TB 2 are modulated by using the 16-QMA constellation diagram with the Gray mapping.

Blind retransmission:

First retransmission and second retransmission: The gNB transmits the TB 1 and the TB 2 to the UE 1 and the UE 2 based on the 16-QAM constellation diagram with the Gray mapping.

Third retransmission: The gNB sends the TB 1 and the TB 2 to the UE 1 and the UE 2 based on the multiplexed modulation.

Specific step details are the same as those in multiplexed modulation processing manners described in FIG. 8a and FIG. 8b, and details are not described herein again.

Receive end

First receiving: The UE 1 receives the TB 1 and the TB 2, and separately demodulates and decodes the TB 1 and the TB 2, where both the TB 1 and the TB 2 are incorrectly demodulated and decoded; and the UE 2 receives the TB 1 and the TB 2, and separately demodulates and decodes the TB 1 and the TB 2, where the TB 1 is correctly demodulated and decoded, and the TB 2 is incorrectly demodulated and decoded.

Second receiving: The UE 1 receives the TB 1 and the TB 2, and separately demodulates and decodes the TB 1 and the TB 2, where the TB 1 is incorrectly demodulated and decoded, and the TB 2 is correctly demodulated and decoded; and the UE 2 receives the TB 2, and demodulates and decodes the TB 2, where the TB 2 is incorrectly demodulated and decoded.

Third receiving: The UE 1 receives the TB 1, and demodulates and decodes the TB 1, where the TB 1 is incorrectly demodulated and decoded; and the UE 2 receives the TB 2, and demodulates and decodes the TB 2, where the TB 2 is incorrectly demodulated and decoded.

Fourth receiving: The UE 1 receives a multiplexed modulation constellation diagram of the TB 1 and the TB 2, demodulates the TB 1 from the TB 3 by using known information of the TB 2, and decodes the TB 1; and the UE 2 receives a multiplexed modulation constellation diagram of the TB 1 and the TB 2, demodulates the TB 2 from the TB 3 by using known information of the TB 1, and decodes the TB 2.

In this embodiment of this application, one piece of control information (namely, third control information) may indicate receiving of TBs of a plurality of devices (for example, two devices), that is, the TBs of the two devices can be received by decoding only one piece of control information. In comparison with a solution in which one piece of control information indicates receiving of a TB of one device, in this implementation, this user does not need to know information about another user, so that user privacy can be protected.

The following describes in detail communication apparatuses provided in this application with reference to FIG. 12 to FIG. 14.

FIG. 12 is a diagram of a structure of a communication apparatus according to an embodiment of this application. The communication apparatus shown in FIG. 12 may be configured to perform some or all functions of the first device, the second device, or the third device in the method embodiments described in FIG. 7 to FIG. 11. The apparatus may be a terminal device or an access network device, may be an apparatus in the terminal device or the access network device, or an apparatus that can be used together with the terminal device or the access network device. The communication apparatus may alternatively be a chip system. The communication apparatus shown in FIG. 12 may include a transceiver unit 1201 and a processing unit 1202. The processing unit 1202 is configured to perform data processing. The transceiver unit 1201 is integrated with a receiving unit and a sending unit. The transceiver unit 1201 may also be referred to as a communication unit. Alternatively, the transceiver unit 1201 may be split into a receiving unit and a sending unit. The following processing unit 1202 and transceiver unit 1201 are similar to those, and details are not described below again.

When the communication apparatus is the third device, the apparatus includes:

a transceiver unit 1201, configured to send at least two transport blocks TBs, where the at least two TBs include a first TB and a second TB, the first TB is a TB corresponding to a first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme; and a processing unit 1202, configured to send a third TB via the transceiver unit 1201 if a preset condition is met, where the third TB includes at least one third modulation symbol, the third modulation symbol is obtained by modulating a third bit group based on a third modulation scheme, and the third bit group includes at least one bit in the first bit group and at least one bit in the second bit group.

In a possible implementation, the processing unit 1202 is configured to:

send the third TB via the transceiver unit 1201 if it is determined that the first device fails to decode the first TB and successfully decodes the second TB, and it is determined that the second device successfully decodes the first TB and fails to decode the second TB;

send the third TB via the transceiver unit 1201 if it is determined that the first device successfully decodes the first TB, and it is determined that the second device successfully decodes the first TB and fails to decode the second TB;

send the third TB via the transceiver unit 1201 if it is determined that the first device fails to decode the first TB and successfully decodes the second TB, and it is determined that the second device successfully decodes the second TB; or

send the third TB via the transceiver unit 1201 if a quantity of times of sending the first TB and the second TB is equal to a preset quantity of times.

In a possible implementation,

the transceiver unit 1201 is configured to receive first feedback information from the first device, where the first feedback information includes acknowledgement information for the first TB or negative acknowledgement information for the first TB; and the processing unit 1202 is configured to determine, based on the first feedback information, that the first device successfully decodes or fails to decode the first TB.

Alternatively, the transceiver unit 1201 is configured to receive second feedback information from the first device, where the second feedback information includes acknowledgement information for the second TB or negative acknowledgement information for the second TB; and the processing unit 1202 is configured to determine, based on the second feedback information, that the first device successfully decodes or fails to decode the second TB.

Alternatively, the transceiver unit 1201 is configured to receive third feedback information from the second device, where the third feedback information includes acknowledgement information for the first TB or negative acknowledgement information for the first TB; and the processing unit 1202 is configured to determine, based on the third feedback information, that the second device successfully decodes or fails to decode the first TB.

Alternatively, the transceiver unit 1201 is configured to receive fourth feedback information from the second device, where the fourth feedback information includes acknowledgement information for the second TB or negative acknowledgement information for the second TB; and the processing unit 1202 is configured to determine, based on the fourth feedback information, that the second device successfully decodes or fails to decode the second TB.

In a possible implementation, a transmission resource of the first feedback information is a first transmission resource, a transmission resource of the second feedback information is a second transmission resource, a transmission resource of the third feedback information is a third transmission resource, and a transmission resource of the fourth feedback information is a fourth transmission resource; and the first transmission resource and the second transmission resource are different, and the third transmission resource and the fourth transmission resource are different.

The first transmission resource corresponds to the first TB, and the second transmission resource corresponds to the second TB; and the third transmission resource corresponds to the first TB, and the fourth transmission resource corresponds to the second TB.

In a possible implementation, a transmission resource of the first feedback information is a first transmission resource, a transmission resource of the second feedback information is a second transmission resource, a transmission resource of the third feedback information is a third transmission resource, and a transmission resource of the fourth feedback information is a fourth transmission resource; and the first transmission resource and the second transmission resource are the same, and the third transmission resource and the fourth transmission resource are the same.

The first feedback information includes first indication information, and the first indication information indicates that the first feedback information is feedback for the first TB.

The second feedback information includes second indication information, and the second indication information indicates that the second feedback information is feedback for the second TB.

The third feedback information includes third indication information, and the third indication information indicates that the third feedback information is feedback for the first TB.

The fourth feedback information includes fourth indication information, and the fourth indication information indicates that the fourth feedback information is feedback for the second TB.

In a possible implementation, the transceiver unit 1201 is further configured to:

send at least two pieces of bandwidth part BWP configuration information, where the at least two pieces of BWP configuration information include first BWP configuration information corresponding to the first device and second BWP configuration information corresponding to the second device, the first BWP configuration information indicates receiving of first control information, and the second BWP configuration information indicates receiving of second control information; and
send at least two pieces of control information, where the at least two pieces of control information include the first control information and the second control information, the first control information indicates receiving of the first TB, and the second control information indicates receiving of the second TB.

In a possible implementation, the first configuration information includes a first control resource set CORESET and a first search space, the second configuration information includes a second CORESET and a second search space, the first search space is associated with a first radio network temporary identifier RNTI, and the second search space is associated with a second RNTI.

In a possible implementation, the first CORESET and the second CORESET are the same or different, the first search space and the second search space are the same or different, and the first RNTI and the second RNTI are the same or different.

In a possible implementation, the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

In a possible implementation, the first control information includes fifth indication information, the fifth indication information indicates that the first TB corresponds to the first device, the second control information includes sixth indication information, and the sixth indication information indicates that the second TB corresponds to the second device.

In a possible implementation, the transceiver unit 1201 is further configured to:
send third control information, where the third control information includes a common information field, a first dedicated information field, and a second dedicated information field, the common information field and the first dedicated information field indicate receiving of the first TB, and the common information field and the second dedicated information field indicate receiving of the second TB.

In a possible implementation, the transceiver unit 1201 is further configured to:
send third BWP configuration information, where the third BWP configuration information indicates receiving of the third control information, the third configuration information includes a third CORESET and a third search space, and the third search space is associated with a second group-RNTI.

In a possible implementation, the transceiver unit 1201 is further configured to:

send fourth BWP configuration information, where the fourth BWP configuration information indicates receiving of fourth control information; and
send the fourth control information, where the fourth control information indicates receiving of the third TB.

In a possible implementation, the transceiver unit 1201 is further configured to:
send seventh indication information and eighth indication information, where the seventh indication information indicates a modulation scheme used by a TB, and the eighth indication information indicates a modulation rule of the TB.

In a possible implementation, the seventh indication information and the eighth indication information are carried in BWP configuration information, the seventh indication information and the eighth indication information are carried in control information, or the seventh indication information and the eighth indication information are predefined in a protocol.

When the communication apparatus is the first device, the apparatus includes:
a transceiver unit 1201, configured to receive at least two transport blocks TBs, where the at least two TBs include a first TB and a second TB, the first TB is a TB corresponding to the first device, the second TB is a TB corresponding to a second device, the first device and the second device belong to a same device group, the first TB includes at least one first modulation symbol, the first modulation symbol is obtained by modulating a first bit group based on a first modulation scheme, the second TB includes at least one second modulation symbol, and the second modulation symbol is obtained by modulating a second bit group based on a second modulation scheme.

The transceiver unit 1201 is configured to receive a third TB, where the third TB includes at least one third modulation symbol, the third modulation symbol is obtained by modulating a third bit group based on a third modulation scheme, and the third bit group includes at least one bit in the first bit group and at least one bit in the second bit group.

In a possible implementation, the apparatus further includes a processing unit 1202, and the processing unit 1202 is configured to:

decode the first TB, and send first feedback information via the transceiver unit 1201, where the first feedback information includes acknowledgement information for the first TB or negative acknowledgement information for the first TB; and
decode the second TB, and send second feedback information via the transceiver unit 1201, where the second feedback information includes acknowledgement information for the second TB or negative acknowledgement information for the second TB.

In a possible implementation, a transmission resource of the first feedback information is a first transmission resource, and a transmission resource of the second feedback information is a second transmission resource; and the first transmission resource and the second transmission resource are different.
The first transmission resource corresponds to the first TB, and the second transmission resource corresponds to the second TB.
In a possible implementation, a transmission resource of the first feedback information is a first transmission resource, and a transmission resource of the second feedback information is a second transmission resource; and the first transmission resource and the second transmission resource are the same.
The first feedback information and third feedback information include first indication information, and the first indication information indicates that the first feedback information is feedback for the first TB.
The second feedback information includes second indication information, and the second indication information indicates that the second feedback information is feedback for the second TB.
In a possible implementation, the transceiver unit 1201 is further configured to:

receive at least two pieces of bandwidth part BWP configuration information, where the at least two pieces of BWP configuration information include first BWP configuration information corresponding to the first device and second BWP configuration information corresponding to the second device, the first BWP configuration information indicates receiving of first control information, and the second BWP configuration information indicates receiving of second control information; and
receive at least two pieces of control information based on the at least two pieces of BWP configuration information, where the at least two pieces of control information include the first control information and the second control information, the first control information indicates receiving of the first TB, and the second control information indicates receiving of the second TB.

In a possible implementation, the first configuration information includes a first control resource set CORESET and a first search space, the second configuration information includes a second CORESET and a second search space, the first search space is associated with a first radio network temporary identifier RNTI, and the second search space is associated with a second RNTI.
In a possible implementation, the first CORESET and the second CORESET are the same or different, the first search space and the second search space are the same or different, and the first RNTI and the second RNTI are the same or different.
In a possible implementation, the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

In a possible implementation, the first control information includes fifth indication information, the fifth indication information indicates that the first TB corresponds to the first device, the second control information includes sixth indication information, and the sixth indication information indicates that the second TB corresponds to the second device.

In a possible implementation, the transceiver unit 1201 is further configured to:
receive third control information, where the third control information includes a common information field, a first dedicated information field, and a second dedicated information field, the common information field and the first dedicated information field indicate receiving of the first TB, and the common information field and the second dedicated information field indicate receiving of the second TB.

In a possible implementation, the transceiver unit 1201 is further configured to:
receive third BWP configuration information, where the third BWP configuration information indicates receiving of the third control information, the third configuration information includes a third CORESET and a third search space, and the third search space is associated with a second group-RNTI.

In a possible implementation, the transceiver unit 1201 is further configured to:

receive fourth BWP configuration information, where the fourth BWP configuration information indicates receiving of fourth control information; and
receive the fourth control information based on the fourth BWP configuration information, where the fourth control information indicates receiving of the third TB.

In a possible implementation, the transceiver unit 1201 is further configured to:
receive seventh indication information and eighth indication information, where the seventh indication information indicates a modulation scheme used by a TB, and the eighth indication information indicates a modulation rule of the TB.

In a possible implementation, the seventh indication information and the eighth indication information are carried in BWP configuration information, the seventh indication information and the eighth indication information are carried in control information, or the seventh indication information and the eighth indication information are predefined in a protocol.

When the communication apparatus is the second device, a case of the second device is similar to that of the first device, and details are not described herein again.

For another possible implementation of the communication apparatus, refer to related descriptions of the terminal device in the method embodiments corresponding to FIG. 7 to FIG. 11. Details are not described herein again.

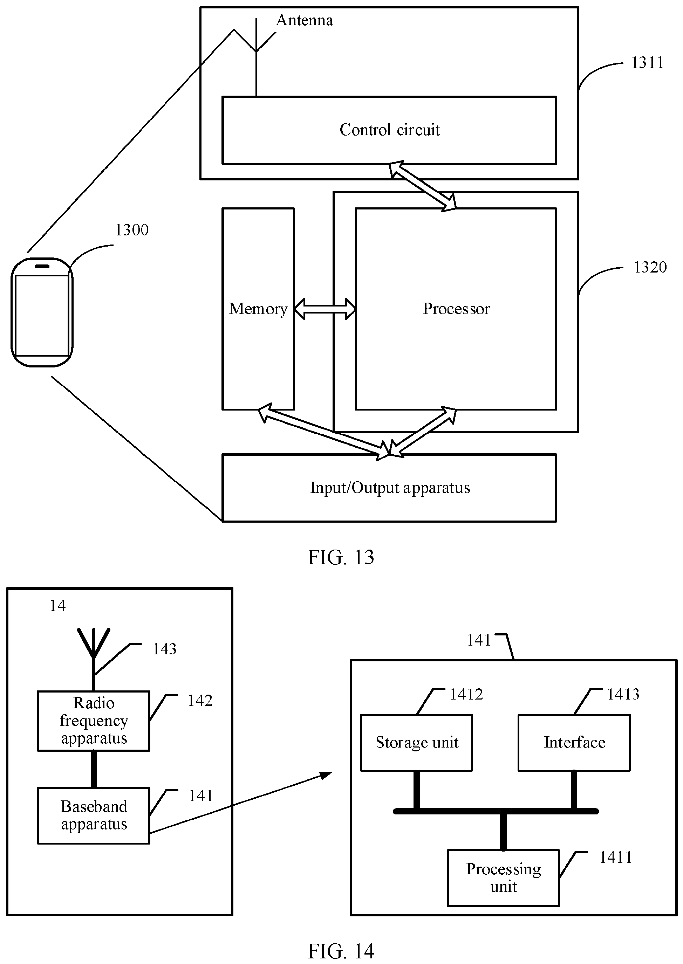

FIG. 13 is a diagram of a structure of another communication apparatus according to an embodiment of this application. As shown in FIG. 13, the communication apparatus may be a first device, a second device, or a third device described in embodiments of this application. The first device, the second device, or the third device may be specifically a terminal device. For ease of description, FIG. 13 shows only main components of a terminal device 1300. As shown in FIG. 13, the terminal device 1300 includes a processor, a memory, a control circuit, an antenna, and an input/output apparatus. The processor is mainly configured to: process a communication protocol and communication data, control the entire terminal device 1300, execute a software program, and process data of the software program. The memory is mainly configured to store the software program and the data. The control circuit is mainly configured to: convert a baseband signal and a radio frequency signal and process the radio frequency signal. The antenna is mainly configured to: receive and send a radio frequency signal in a form of an electromagnetic wave. The input/output apparatus, for example, a touchscreen, a display, a microphone, or a keyboard, is mainly configured to: receive data input by a user and output data to the user.

For example, the terminal device 1300 is a mobile phone. After the terminal device 1300 is powered on, the processor may read a software program in a storage unit, interpret and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave by using the antenna. When data is sent to the terminal device 1300, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13 shows only one memory and one processor. In some embodiments, the terminal device 1300 may include a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to: process the communication protocol and the communication data. The central processing unit is mainly configured to: control the entire terminal device 1300, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. The terminal device 1300 may include a plurality of baseband processors to adapt to different network standards. The terminal device 1300 may include a plurality of central processing units to enhance a processing capability of the terminal device. Components of the terminal device 1300 may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 1311 of the terminal device 1300, and the processor having a processing function may be considered as a processing unit 1320 of the terminal device 1300. As shown in FIG. 13, the terminal device 1300 includes the transceiver unit 1311 and the processing unit 1320. The transceiver unit may also be referred to as a transceiver, a transceiver device, a transceiver apparatus, or the like. Optionally, a device that is in the transceiver unit 1311 and that is configured to implement a receiving function may be considered as a receiving unit, and a device that is in the transceiver unit 1311 and that is configured to implement a sending function may be considered as a sending unit. That is, the transceiver unit 1311 includes the receiving unit and the sending unit. For example, the receiving unit may also be referred to as a receiver, a receiver device, or a receiving circuit, and the sending unit may also be referred to as a transmitter, a transmitter device, or a transmitting circuit.

FIG. 14 is a diagram of a structure of another communication apparatus according to an embodiment of this application. As shown in FIG. 14, the communication apparatus may be a first device, a second device, or a third device described in embodiments of this application. The first device, the second device, or the third device may be specifically a network device. For example, the network device is specifically an access network device. The network device 14 includes a baseband apparatus 141, a radio frequency apparatus 142, and an antenna 143. In an uplink direction, the radio frequency apparatus 142 receives, through the antenna 143, information sent by a terminal device, and sends, to the baseband apparatus 141 for processing, the information sent by the terminal device. In a downlink direction, the baseband apparatus 141 processes information about a terminal device, and sends the information about the terminal device to the radio frequency apparatus 142. The radio frequency apparatus 142 processes the information about the terminal device and then sends processed information to the terminal device through the antenna 143.

The baseband apparatus 141 includes one or more processing units 1411, a storage unit 1412, and an interface 1413. The processing unit 1411 is configured to support the network device in performing functions of the network device in the foregoing method embodiments. The storage unit 1412 is configured to store a software program and/or data. The interface 1413 is configured to exchange information with the radio frequency apparatus 142. The interface includes an interface circuit, configured to: input and output information. In an implementation, the processing unit is an integrated circuit, for example, one or more application-specific integrated circuits (application specific integrated circuits, ASICs), one or more digital signal processors (digital signal processors, DSPs), one or more field programmable gate arrays (field programmable gate arrays, FPGAs), or a combination of such integrated circuits. These integrated circuits may be integrated together to form a chip. The storage unit 1412 and the processing unit 1411 may be located on a same chip, namely, an on-chip storage element. Alternatively, the storage unit 1412 and the processing unit 1411 may be located on a different chip from the processing unit 1411, that is, an off-chip storage element. The storage unit 1412 may be a memory, or may be a collective term of a plurality of memories or storage elements.

The network device may implement some or all of the steps in the foregoing method embodiments in a form of scheduling a program by using one or more processing units. For example, corresponding functions of the network device in FIG. 7 to FIG. 11 are implemented. The one or more processing units may support radio access technologies of a same standard, or may support radio access standards of different standards.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one place, or may be distributed on a plurality of network units. Some or all of the units may be selected based on an actual requirement to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be used to carry or store expected program code in a form of instructions or a data structure and that can be accessed by the computer. In addition, by way of example, and not limitation, many forms of RAMs are available, for example, a static random access memory (Static RAM, SRAM), a dynamic random access memory (Dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (Direct rambus RAM, DR RAM).

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

**Claims**

1. A communication method, comprising:

  sending at least two transport blocks TBs, wherein the at least two TBs comprise a first TB and a second TB, the first TB is a TB corresponding to a first device, the second TB is a TB corresponding to a second device, the first device and the second device belong to a same device group, the first TB comprises at least one first modulation symbol, the first modulation symbol is obtained by modulating a first bit group based on a first modulation scheme, the second TB comprises at least one second modulation symbol, and the second modulation symbol is obtained by modulating a second bit group based on a second modulation scheme; and
  sending a third TB if a preset condition is met, wherein the third TB comprises at least one third modulation symbol, the third modulation symbol is obtained by modulating a third bit group based on a third modulation scheme, and the third bit group comprises at least one bit in the first bit group and at least one bit in the second bit group.

2. The method according to claim 1, wherein the sending a third TB if a preset condition is met comprises:

  sending the third TB if it is determined that the first device fails to decode the first TB and successfully decodes the second TB, and it is determined that the second device successfully decodes the first TB and fails to decode the second TB;
  sending the third TB if it is determined that the first device successfully decodes the first TB, and it is determined that the second device successfully decodes the first TB and fails to decode the second TB;

sending the third TB if it is determined that the first device fails to decode the first TB and successfully decodes the second TB, and it is determined that the second device successfully decodes the second TB; or

sending the third TB if a quantity of times of sending the first TB and the second TB is equal to a preset quantity of times.

3. The method according to claim 2, wherein the method further comprises:

receiving first feedback information from the first device, wherein the first feedback information comprises acknowledgement information for the first TB or negative acknowledgement information for the first TB; and

determining, based on the first feedback information, that the first device successfully decodes or fails to decode the first TB; or

receiving second feedback information from the first device, wherein the second feedback information comprises acknowledgement information for the second TB or negative acknowledgement information for the second TB; and

determining, based on the second feedback information, that the first device successfully decodes or fails to decode the second TB; or

receiving third feedback information from the second device, wherein the third feedback information comprises acknowledgement information for the first TB or negative acknowledgement information for the first TB; and

determining, based on the third feedback information, that the second device successfully decodes or fails to decode the first TB; or

receiving fourth feedback information from the second device, wherein the fourth feedback information comprises acknowledgement information for the second TB or negative acknowledgement information for the second TB; and

determining, based on the fourth feedback information, that the second device successfully decodes or fails to decode the second TB.

4. The method according to any one of claims 1 to 3, wherein the method further comprises:

sending at least two pieces of bandwidth part BWP configuration information, wherein the at least two pieces of BWP configuration information comprise first BWP configuration information corresponding to the first device and second BWP configuration information corresponding to the second device, the first BWP configuration information indicates receiving of first control information, and the second BWP configuration information indicates receiving of second control information; and

sending at least two pieces of control information, wherein the at least two pieces of control information comprise the first control information and the second control information, the first control information indicates receiving of the first TB, and the second control information indicates receiving of the second TB.

5. The method according to claim 4, wherein the first configuration information comprises a first control resource set CORESET and a first search space, the second configuration information comprises a second CORESET and a second search space, the first search space is associated with a first radio network temporary identifier RNTI, and the second search space is associated with a second RNTI.

6. The method according to claim 5, wherein the first CORESET and the second CORESET are the same or different, the first search space and the second search space are the same or different, and the first RNTI and the second RNTI are the same or different.

7. The method according to claim 6, wherein the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

8. The method according to any one of claims 4 to 7, wherein the first control information comprises fifth indication information, the fifth indication information indicates that the first TB corresponds to the first device, the second control information comprises sixth indication information, and the sixth indication information indicates that the second TB corresponds to the second device.

9. The method according to any one of claims 1 to 3, wherein the method further comprises:
sending third control information, wherein the third control information comprises a common information field, a first dedicated information field, and a second dedicated information field, the common information field and the first dedicated information field indicate receiving of the first TB, and the common information field and the second dedicated information field indicate receiving of the second TB.

10. The method according to claim 9, wherein the method further comprises:

sending third BWP configuration information, wherein the third BWP configuration information indicates receiving of the third control information, the third configuration information comprises a third CORESET and a third search space, and the third search space is associated with a second group-RNTI.

11. The method according to any one of claims 1 to 10, wherein the method further comprises:

sending fourth BWP configuration information, wherein the fourth BWP configuration information indicates receiving of fourth control information; and
sending the fourth control information, wherein the fourth control information indicates receiving of the third TB.

12. The method according to any one of claims 1 to 11, wherein the method further comprises:
sending seventh indication information and eighth indication information, wherein the seventh indication information indicates a modulation scheme used by a TB, and the eighth indication information indicates a modulation rule of the TB.

13. The method according to claim 12, wherein the seventh indication information and the eighth indication information are carried in BWP configuration information, the seventh indication information and the eighth indication information are carried in control information, or the seventh indication information and the eighth indication information are predefined in a protocol.

14. A communication method, wherein the method is applied to a first device, and the method comprises:

receiving at least two transport blocks TBs, wherein the at least two TBs comprise a first TB and a second TB, the first TB is a TB corresponding to the first device, the second TB is a TB corresponding to a second device, the first device and the second device belong to a same device group, the first TB comprises at least one first modulation symbol, the first modulation symbol is obtained by modulating a first bit group based on a first modulation scheme, the second TB comprises at least one second modulation symbol, and the second modulation symbol is obtained by modulating a second bit group based on a second modulation scheme; and
receiving a third TB, wherein the third TB comprises at least one third modulation symbol, the third modulation symbol is obtained by modulating a third bit group based on a third modulation scheme, and the third bit group comprises at least one bit in the first bit group and at least one bit in the second bit group.

15. The method according to claim 14, wherein the method further comprises:

decoding the first TB, and sending first feedback information, wherein the first feedback information comprises acknowledgement information for the first TB or negative acknowledgement information for the first TB; and
decoding the second TB, and sending second feedback information, wherein the second feedback information comprises acknowledgement information for the second TB or negative acknowledgement information for the second TB.

16. The method according to claim 14 or 15, wherein the method further comprises:

receiving at least two pieces of bandwidth part BWP configuration information, wherein the at least two pieces of BWP configuration information comprise first BWP configuration information corresponding to the first device and second BWP configuration information corresponding to the second device, the first BWP configuration information indicates receiving of first control information, and the second BWP configuration information indicates receiving of second control information; and
receiving at least two pieces of control information based on the at least two pieces of BWP configuration information, wherein the at least two pieces of control information comprise the first control information and the second control information, the first control information indicates receiving of the first TB, and the second control information indicates receiving of the second TB.

17. The method according to claim 16, wherein the first configuration information comprises a first control resource set CORESET and a first search space, the second configuration information comprises a second CORESET and a second search space, the first search space is associated with a first radio network temporary identifier RNTI, and the second search space is associated with a second RNTI.

18. The method according to claim 17, wherein the first CORESET and the second CORESET are the same or different, the first search space and the second search space are the same or different, and the first RNTI and the second RNTI are the same or different.

19. The method according to claim 18, wherein the first CORESET and the second CORESET are the same, the first search space and the second search space are the same, the first RNTI and the second RNTI are the same, the first RNTI and the second RNTI are a first group-RNTI, and the first group-RNTI is used to receive the first control information and the second control information.

20. The method according to any one of claims 17 to 19, wherein the first control information comprises fifth indication information, the fifth indication information indicates that the first TB corresponds to the first device, the second control information comprises sixth indication information, and the sixth indication information indicates that the second TB corresponds to the second device.

21. The method according to claim 14 or 15, wherein the method further comprises:
receiving third control information, wherein the third control information comprises a common information field, a first dedicated information field, and a second dedicated information field, the common information field and the first dedicated information field indicate receiving of the first TB, and the common information field and the second dedicated information field indicate receiving of the second TB.

22. The method according to claim 21, wherein the method further comprises:
receiving third BWP configuration information, wherein the third BWP configuration information indicates receiving of the third control information, the third configuration information comprises a third CORESET and a third search space, and the third search space is associated with a second group-RNTI.

23. The method according to any one of claims 14 to 22, wherein the method further comprises:

receiving fourth BWP configuration information, wherein the fourth BWP configuration information indicates receiving of fourth control information; and
receiving the fourth control information based on the fourth BWP configuration information, wherein the fourth control information indicates receiving of the third TB.

24. The method according to any one of claims 14 to 23, wherein the method further comprises:
receiving seventh indication information and eighth indication information, wherein the seventh indication information indicates a modulation scheme used by a TB, and the eighth indication information indicates a modulation rule of the TB.

25. The method according to claim 24, wherein the seventh indication information and the eighth indication information are carried in BWP configuration information, the seventh indication information and the eighth indication information are carried in control information, or the seventh indication information and the eighth indication information are predefined in a protocol.

26. A communication apparatus, comprising a unit or a module configured to perform the method according to any one of claims 1 to 13, or comprising a unit or a module configured to perform the method according to any one of claims 16 to 25.

27. A communication apparatus, wherein the communication apparatus comprises a processor, a transceiver, and a storage medium, the storage medium stores instructions, and when the instructions are run by the processor and the transceiver, the method according to any one of claims 1 to 13 is implemented, or the method according to any one of claims 16 to 25 is implemented.

28. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 by using a logic circuit or by executing instructions, or the processor is configured to implement the method according to any one of claims 16 to 25 by using a logic circuit or by executing instructions.

29. A computer-readable storage medium, wherein the storage medium stores a computer program or instructions, and when the computer program or the instructions are executed by a computer, the method according to any one of claims 1 to 13 is performed, or the method according to any one of claims 16 to 25 is performed.

30. A computer program product, comprising a computer program, wherein when the computer program runs on a computer, the method according to any one of claims 1 to 13 is performed, or the method according to any one of claims 16 to 25 is performed.

FIG. 1

FIG. 2

APT: acquisition
and tracking

FIG. 3

Television

Mobile
phone

FIG. 4

Integrated access and backhaul donor: IAB donor
Integrated access and backhaul node: IAB donor

FIG. 5

| First transmission (first moment) | Second transmission (second moment) | Third transmission (third moment) | Fourth transmission (fourth moment) |
|---|---|---|---|
| 16-QMA constellation diagram with Gray mapping | 16-QMA constellation diagram with the Gray mapping | 16-QAM constellation diagram with multiplexed mapping | 16-QAM constellation diagram with the multiplexed mapping |
| X1 | X2 | X3 | X4 |

X3 includes a part of bits from X1 and a part of bits from X2

X4 includes a remaining bit from X1 and a remaining bit from X2

Both X1 and X2 are TBs corresponding to UE 1

FIG. 6a

Decimal multiplexed modulation
constellation diagram

Binary multiplexed modulation
constellation diagram

(1)

(2)

(3)

(4)

FIG. 6b

Third device

First device | Second device

S701: Send at least two pieces of bandwidth part BWP configuration information

S702: Send at least two pieces of control information

S703: Send at least two transport blocks TBs

S704: Send a third TB if a preset condition is met

FIG. 7

FIG. 8a

FIG. 8b

User group

UE 1 — The UE 1 needs a TB 1

UE 2 — The UE 2 needs a TB 2

UE 3 — The UE 3 needs a TB 3

FIG. 9

Third device

First device | Second device

S1001: Send third bandwidth part BWP configuration information

S1002: Send third control information

S1003: Send at least two transport blocks TBs

S1004: Send a third TB if a preset condition is met

FIG. 10

User group

The UE 1
needs the TB 1

UE 1

UE 2

The UE 2 needs
the TB 2

| Initial transmission | First retransmission | Second retransmission | Third retransmission |
|---|---|---|---|

TB 1 | TB 2 | TB 1 | TB 2 | TB 1 | TB 2 | TB 3

UE 1

No receiving or no decoding

× × × √ ×

TB 1 | TB 2 | TB 1 | TB 2 | TB 1 | TB 2 | TB 3

UE 2

√ × No receiving or no decoding × No receiving or no decoding ×

TB 1 | TB 2 | TB 1 | TB 2 | TB 1 | TB 2 | TB 3

FIG. 11

1201

Transceiver unit

1202

Processing unit

Communication apparatus

FIG. 12

FIG. 13

FIG. 14

## INTERNATIONAL SEARCH REPORT

International application No.

**PCT/CN2022/134780**

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC:H04L,H04Q,H04W

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 传输块, 调制符号, 调制方式, 比特组, 设备组, 条件, 反馈, TB, transport block, modulation symbol, modulation mode, bit group, device group, feedback

### C. DOCUMENTS CONSIDERED TO BE RELEVANT

| Category* | Citation of document, with indication, where appropriate, of the relevant passages | Relevant to claim No. |
|---|---|---|
| X | CN 114189318 A (HUAWEI TECHNOLOGIES CO., LTD.) 15 March 2022 (2022-03-15) description, paragraphs 104-184 | 1, 4-30 |
| A | CN 114189318 A (HUAWEI TECHNOLOGIES CO., LTD.) 15 March 2022 (2022-03-15) description, paragraphs 104-184 | 2, 3 |
| A | CN 111052652 A (QUALCOMM INC.) 21 April 2020 (2020-04-21) entire document | 1-30 |
| A | US 2021144743 A1 (COMCAST CABLE COMMUNICATIONS, LLC) 13 May 2021 (2021-05-13) entire document | 1-30 |
| A | WO 2020118632 A1 (QUALCOMM INC. et al.) 18 June 2020 (2020-06-18) entire document | 1-30 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 July 2023** | **01 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/134780**

| Patent document cited in search report | | | Publication date (day/month/year) | Patent family member(s) | | | Publication date (day/month/year) |
|---|---|---|---|---|---|---|---|
| CN | 114189318 | A | 15 March 2022 | None | | | |
| CN | 111052652 | A | 21 April 2020 | EP | 3679673 | A1 | 15 July 2020 |
| | | | | US | 2019074952 | A1 | 07 March 2019 |
| | | | | US | 10917219 | B2 | 09 February 2021 |
| | | | | WO | 2019050681 | A1 | 14 March 2019 |
| US | 2021144743 | A1 | 13 May 2021 | EP | 3820224 | A1 | 12 May 2021 |
| | | | | CA | 3098577 | A1 | 07 May 2021 |
| WO | 2020118632 | A1 | 18 June 2020 | None | | | |

Form PCT/ISA/210 (patent family annex) (July 2022)